# EUROPÄISCHE PATENTSCHRIFT

(11) **EP 1 578 826 B1**
(45) Veröffentlichungstag und Bekanntmachung des Hinweises auf die Patenterteilung: **20.06.2007**
(21) Anmeldenummer: 03782440.6
(22) Anmeldetag: 18.12.2003
(51) Int. Cl.: C08G 12/00, C08G 12/26, C08G 12/30, C08G 12/32, C08G 12/40, C08G 12/42, C08K 5/3492, D06M 15/00, D21H 17/51

(54) **KUNSTSTOFFDISPERSIONEN**
SYNTHETIC MATERIAL DISPERSIONS
DISPERSIONS DE MATIERE SYNTHETIQUE

(30) Priorität: 19.12.2002 DE 10261805
(43) Veröffentlichungstag der Anmeldung: 28.09.2005
(73) Patentinhaber: AMI Agrolinz Melamine International GmbH, 4021 Linz (AT)
(72) Erfinder: JOCHAM, Daniel, A-4020 Linz (AT); RÄTZSCH, Manfred, A-4073 Wilhering (AT)
(74) Vertreter: Gross, Felix
(86) Internationale Anmeldenummer: PCT/EP2003/014452
(87) Internationale Veröffentlichungsnummer: WO 2004/056899

(56) Entgegenhaltungen:
- EP-A- 1 247 837
- WO-A-02/00429
- WO-A-02/48261

## Beschreibung

Die Erfindung betrifft Kunststoffdispersionen zur Herstellung von mit hydrophoben Oberflächen ausgerüsteten hydrophilen Flächengebilden oder hydrophilen Formkörpern.

Der Einsatz von Lösungen von Melaminharz-Vorkondensaten oder partiell veretherten Meiaminharz-Vorkondensaten in Wasser oder Alkohol-Wasser-Mischungen als Beschichtungs- oder Imprägniermittel für hydrophile Flächengebilde ist bekannt (EP 0 686 665 A2; DE 44 20 013 A1).

Von Nachteil bei den mit üblichen, Melaminharzlösungen imprägnierten hydrophilen Flächengebilden wie Papier oder Pappe ist deren geringe Bewitterungsresistenz im Außeneinsatz, da Wasser ungehindert in die imprägnierte Oberflächenschicht eindiffundieren kann und eine Rissbildung in der Oberflächenschicht auslösen kann.

Bekannte Verfahren zur Verbesserung der Bewitterungsresistenz von Melaminharz-imprägnierten hydrophilen Flächengebilden ist die zusätzliche Beschichtung der imprägnierten Flächengebilde mit einer hydrophoben Deckschicht aus Polyvinylfluorid (US 3 676 290 A), Polyacrylaten (DE 33 29 679 C1; EP 0 824 560 A1; US 3 841 956 A; DE 36 30 315 A1), ungesättigten Polyestern (EP 0 824 560 A1) oder Ethylen-Propylen-Kautschuk (EP 0 206 832 A1). Die Kompatibilität dieser hydrophoben Deckschichten mit der darunter liegenden hydrophilen Schicht ist jedoch begrenzt, so dass bei mechanischer Beanspruchung eine Schichtenablösung auftreten kann.

Weiterhin sind Melaminharzdispersionen bekannt, die vollständig oder partiell ausgehärtete Melaminharzpartikel enthalten. Nach US 3 945 980 A wird ein Aminharzvorkondensat bis zur Überschreitung seiner Wasserverträglichkeitsgrenze unter Zusatz von Polyvinylalkohol verdünnt und sauer ausgehärtet. US 5 344 704 A beschreibt Dispersionen von ausgehärteten vermahlenen Melaminharzpartikeln in Wasser oder Melaminharzlösungen. Nanoskalige Dispersionen und hydrophobe Oberflächen lassen sich mit diesen Dispersionen jedoch nicht erzielen.

Aufgabe der Erfindung sind Kunststoffdispersionen zur Herstellung von mit hydrophoben Oberflächen ausgerüsteten hydrophilen Flächengebilden oder hydrophilen Formkörpern.

Überraschenderweise wurde gefunden, dass mit hydrophoben Oberflächen ausgerüstete hydrophile Flächengebilde oder hydrophile Formkörper durch Beschichtung von hydrophilen Flächengebilden oder hydrophilen Formkörpern mit Aminoplastdispersionen, die hydrophobe und hydrophile Melaminharzkomponenten sowie Hydrophobierungsmittel enthalten, hergestellt werden können.

Die erfinderische Aufgabe wurde durch Kunststoffdispersionen gelöst, die erfindungsgemäß aus
a) einer wässrigen Phase aus Lösungen von hydrophilen Melaminharzvorkondensaten und latenten Härtungskatalysatoren in Wasser oder in Mischungen aus Wasser und C₁-C₆-Alkoholen und
b) einer organischen Nanophase in Form von Nanotröpfchen und/oder Nanopartikeln aus 70 bis 99 Masse% wasserunlöslichen veretherten Melaminharzvorkondensaten, die saure Härtungskatalysatoren und Hydrophobierungsmittel enthalten und
c) Dispergatoren in einer Konzentration von 1 bis 10 Masse%, bezogen auf die Gesamtmasse der Melaminharzvorkondensate bestehen,
wobei in den Kunststoffdispersionen das Verhältnis hydrophile Melaminharzvorkondensate zu wasserunlösliche veretherte Melaminharzvorkondensate 10 : 1 bis 1 : 10 und der Wassergehalt der Kunststoffdispersionen 8 bis 50 Masse% ist.

Bevorzugt enthalten die erfindungsgemäßen Kunststoffdispersionen 0,1 bis 5 Masse% Pigmente und/oder 0,1 bis 5 Masse% Flammschutzmittel jeweils bezogen auf die Gesamtmasse der Melaminharzvorkondensate.

Beispiele für geeignete Pigmente, die in den erfindungsgemäßen Kunststoffdispersionen enthalten sein können, sind Eisenoxid, Estergruppenenthaltende Isoindolinpigmente, Anthracenfluoreszenzfarbstoffe, Carbazoldioxazin und Delta-Indanthron-Blaupigment.

Beispiele für geeignete Flammschutzmittel, die in den erfindungsgemäßen Kunststoffdis-persionen enthalten sein können, sind Ammoniumpolyphosphat, Melamincyanurat und Zinkborat.

Beispiele für die Melaminharzvorkondensate in der wässrigen und in der organischen Nanophase sind Melaminharzvorkondensate, die als Aldehyd-Komponenten Formaldehyd, Acetaldehyd und/oder Trimethylolacetaldehyd, und als Melaminkomponenten neben Melamin ebenfalls Acetoguanamin und/oder Benzoguanamin, enthalten können. ,

Bevorzugt sind die Melaminharzvorkondensate in der wässrigen Phase und in der organischen Nanophase der erfindungsgemäßen Kunststoffdispersionen Melaminharzvorkondensate auf Basis von Melamin und Formaldehyd.

Bevorzugt beträgt die Konzentration der Härtungskatalysatoren sowohl in den hydrophilen als auch in den wasserunlöslichen Melaminharzvorkondensaten 0,05 bis 3 Masse%, bezogen auf die Melaminharzvorkondensate.

Weiters bevorzugt ist es, wenn in den hydrophilen Melaminharzvorkondensaten das Molverhältnis Aldehydkomponente / Melaminkomponente 1,6 : 1 bis 4,5 : 1 ist und wenn die Konzentration der hydrophilen Melaminharzvorkondensate in der wässrigen Phase 10 bis 50 Masse% beträgt.

In einer bevorzugten Ausführungsform sind die hydrophilen Melaminharzvorkondensate partiell mit C₁-C₄-Alkoholen veretherte Melaminharzvorkondensate und/oder nicht veretherte Melaminharnrorkondensate und beträgt das Mischungsverhältnis in den Mischungen aus Wasser und C₁-C₆-Alkoholen 95 : 5 bis 5 : 95.

Dabei ist es besonders vorteilhaft, wenn der Anteil der nicht mit C₁-C₄-Alkoholen veretherten Hydroxygruppen der partiell mit C₁-C₄-Alkoholen veretherten Melaminharzvorkondensate 5 bis 75 Mol%, bezogen auf die Summe von Hydroxygruppen und C₁-C₄-Alkoxygruppen in den partiell mit C₁-C₄-Alkoholen veretherten Melaminharzvorkondensaten, beträgt.

Beispiele für partiell mit C₁-C₄-Alkoholen veretherte Melaminharzvorkondensate sind Vorkondensate, die 2,4-Bis(methoxymethylamino)-6-hydroxymethylamino-1,3,5-triazin, 2-Butoxymethylamino-4,6-dihydroxymethylamino-1,3,5-triazin oder 2-Ethoxymethylamino-4-methoxymethylamino-6-hydroxymethyamino-1,3,5-triazin als Hauptkomponente im Gemisch mit deren höhermolekularen Oligomeren enthalten.

Beispiele für nicht veretherte Melaminharzvorkondensate sind Vorkondensate, die 2,4,6-Tris(hydroxymethylamino)-1,3,5-triazin, 2,4-Bis(hydroxymethylamino)-6-amino-1,3,5-tria-zin oder 2,4-Bis(hydroxymethylamino)-6-(dihydroxymethyl)imino-1,3,5-triazin als Hauptkomponente im Gemisch mit deren höhermolekularen Oligomeren enthalten.

Weiters bevorzugt sind Kunststoffdispersionen, bei welchen die wässrige Phase 1 bis 20 Masse%, bezogen auf die hydrophilen Melaminharzvorkondensate, weitere wasserlösliche Polymere und/oder wasserlösliche mehrwertige Alkohole mit Molmassen von 62 bis 5000 enthält.

Bevorzugt sind die weiteren wasserlöslichen Polymere in der wässrigen Phase der erfindungsgemäßen Kunststoffdispersionen Hydroxyalkyl(meth)acrylatCopolymere, Polyhydroxyester, Polyvinylalkohol, Polypropylenoxide, Polycaprolacton und/oder Ethylenoxid-Propylenoxid-Blockcopolymere.

Beispiele für Hydroxyalkyl(meth)acrylat-Copolymere als weitere wasserlösliche Polymere in der wässrigen Phase der erfindungsgemässen Kunststoffdispersionen sind Hydroxy-ethylacrylat-Methylmethacrylat-Copolyere und Acrylamid-Hydroxybutylacrylat-Copolymere.

Beispiele für Polyhydroxyester als weitere wasserlösliche Polymere in der wässrigen Phase der erfindungsgemäßen Kunststoffdispersionen sind Polyhydroxyester auf Basis Phthalsäureanhydrid und Glycerin und Polyhydroxyester auf Basis Maleinsäureanhydrid und Pentaerythrit.

Beispiele für wasserlösliche mehrwertige Alkohole mit Molmassen von 62 bis 5000, die in der wässrigen Phase der Kunststoffdispersionen enthalten sein können, sind Ethylen-glycol, Tripropylenglycol, Hexandiol, Pentaerythrit, Sorbit, Polyethylenglycole und Polytetrahydrofurane.

Bevorzugt sind Kunststoffdispersionen, bei welchen die wasserunlöslichen veretherten Melaminharzvorkondensate in der organischen Nanophase mit C₁-C₄-Alkoholen, C₂-C₂₀-Diolen und/ oder Polyalkylenoxiden mit Molmassen von 250 bis 5000 vollständig veretherte und/oder mit C₅-C₁₈-Alkoholen, C₂C₂₀-Diolen und/oder Polyalkylenoxiden mit Molmassen von 250 bis 5000 partiell veretherte Melaminharzvorkondensate sind.

Beispiele für die in der organischen Nanophase als wasserunlösliche veretherte Melaminharzvorkondensate bevorzugt enthaltenen mit C₁-C₄-Alkoholen vollständig veretherten Melaminharzvorkondensate sind Vorkondensate, die 2,4,6-Tris(methoxymethylamino)-1,3,5-triazin, 4,6-Bis(ethoxymethylamino)-2-butoxymethylamino-1,3,5-triazin oder 2,4,6-Tris(dimethoxymethylimino)-1,3,5-triazin als Hauptkomponente im Gemisch mit deren höhermolekularen Oligomeren enthalten.

Beispiele für die in der organischen Nanophase als wasserunlösliche veretherte Melaminharzvorkondensate bevorzugt enthaltenen mit C₅-C₁₈-Alkoholen partiell veretherten Melaminharzvorkondensate sind Vorkondensate, die 2,4-Bis(Dodecyloxymethylamino)-6-hydroxymethylamino-1,3,5-triazin, 2-Stearyloxymethylamino-4,6-dihydroxymethylamino-1,3,5-triazin oder 2-Octyloxymethylamino-4-hexyloxymethylamino-6-hydroxymethyamino-1,3,5-triazin als Hauptkomponente im Gemisch mit deren höhermolekularen Oligomeren enthalten.

Beispiele für C₂-C₂₀-Diolkomponenten, die in den vollständig oder partiell mit C₂-C₂₀-Diolen veretherten wasserunlöslichen Melaminharzvorkondensaten enthalten sein können, sind Ethylenglycol, Diglycol, Octandiol und Dian-EthylenoxidAddukte.

Beispiele für Polyalkylenoxidkomponenten mit Molmassen von 250 bis 5000, die in den vollständig oder partiell mit Polyalkylenoxiden veretherten wasserunlöslichen Melaminharzvorkondensaten enthalten sein können, sind Polyethylenoxid, Polypropylenoxid, Ethylenoxid-Propylenoxid-Blockcopolymere oder Polytetrahydrofurane.

Vorteilhaft sind Kunststoffdispersionen, bei welchen in den wasserunlöslichen veretherten Melaminharzvorkondensaten das Molverhältnis Aldehydkomponente / Melaminkomponente 3 : 1 bis 6 : 1 ist und der mittlere Durchmesser der Nanotröpfchen oder Nanopartikel 50 bis 300 nm beträgt.

Bevorzugt enthält die organische Nanophase 0,1 bis 2 Masse%, Stabilisatoren, 1 bis 20 Masse% wasserunlösliche mehrwertige Alkohole mit Molmassen von 134 bis 5000 und/oder 1 bis 30 Masse% Schichtsilikate, jeweils bezogen auf die wasserunlöslichen veretherten Melaminharzvorkondensate.

Beispiele für geeignete Stabilisatoren, die in der organischen Nanophase enthalten sein können, sind UV-Stabilisatoren wie 2-(2-Hydroxy-3-tert.butyl-5-methylphenyl)benztriazol, 2,4-Dihydroxybenzophenon, Sebacinsäure-bis[2,2,6,6-tetramethyl-1-(octyloxy)-4-piperidi-nyl]ester oder Bis(2,2,6,6-tetramethyl-4-piperidinyl)sebacat und/oder Antioxidantien wie Octadecyl-3-(3', 5'-di-tert.butyl-4'-hydroxyphenyl)propionat.

Beispiele für wasserunlösliche mehrwertige Alkohole mit Molmassen von 134 bis 5000, die in der organischen Nanophase enthalten sein können, sind Octandiol, Dodecandiol, Octadecandiol und Polypropylenglycole mit Molmassen von 500 bis 5000.

Beispiele für geeignete Schichtsilikate, die in der organischen Nanophase enthalten sein können, sind Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermi-culit, Halloysit, Volkonskoit, Magadit, Rectorit, Kenyait, Sauconit, Borfluorphlogopite und/ oder synthetische Smectite.

Die Hydrophobierungsmittel, die in der organischen Nanophase enthalten sind, sind bevorzugt 30 bis 1 Masse% organische Siliciumverbindungen vom Typ Organosilanole, Organosiloxane, Organosilane, Organoaminosilane, Aminoendgruppen- oder Hydroxyendgruppen-terminierte . Polyorganosiloxane; Oberflächenfluorierte SiO₂-Nanopartikel, Polytetrafluorethylen-Nanopartikel und/oder Imidgruppen enthaltenden Copolymere von ethylenisch ungesättigten C₄-C₂₀-Dicarbonsäureanhydriden.

Beispiele für Aminoendgruppen- oder Hydroxyendgruppen-terminierte Polyorganosiloxane als Hydrophobierungsmittel sind Aminopropyl-terminierte Polydimethylsiloxane oder Hydroxybutyl-terminierte Polydimethylsiloxane mit Molmassen von 1000 bis 6000.

Beispiele für Organosilanole als Hydrophobierungsmittel sind Trimethylsilanol, Diethylsilandiol, Triisopropylsilanol und Triphenylsilanol.

Beispiele für Organosiloxane sind Tetramethyldisiloxandiol oder Tetraphenyldisiloxandiol.

Beispiele für Organosilane sind Tetraphenylsilan, Vinyltrimethoxysilan und Tetradodecyl-silan.

Beispiele für Organoaminosilane sind Triethylaminosilan und Triphenylaminosilan.

Beispiele für Oberflächen-fluorierte SiO₂-Nanopartikel sind pyrogene Kieselsäuren mit mittleren Teilchendurchmessern im Bereich von 5 bis 30 nm, die durch Umsetzung mit fluorierten Kohlenwasserstoffen modifiziert sind.

Geeignete Imidgruppen enthaltende Copolymere von ethylenisch ungesättigten C₄-C₂₀-Dicarbonsäureanhydriden sind Styren-Maleinsäureanhydrid-Copolymere, die mit Aminen wie Octylamin, Diglycolamin oder Ethanolamin imidisiert sind.

Vorteilhafterweise werden in den erfindungsgemäßen Kunststoffdispersionen als Dispergatoren nichtionogene Dispergatoren oder Mischungen aus 50 bis 99 Masse% nichtionogenen und 1 bis 50 Masse% anionischen Dispergatoren eingesetzt.

Bevorzugt werden in den Kunststoffdispersionen als Dispergatoren veretherte Melaminharzoligomere mit Molmassen von 2000 bis 30000 eingesetzt.
Besonders vorteilhaft sind mit Polyethylenglykolen mit Molmassen von 1000 bis 8000 und/oder C1-C12 monoalkylveretherten Polyethylenglykolen mit Molmassen von 1000 bis 8500 und C1-C10 Alkoholen veretherte Melaminharzoligomere. In einer besonders bevorzugten Ausführungsform beträgt dabei das Molverhältnis Polyethylenglykol / C1-C10-Alkohol 1 : 10 bis 2 : 1 und das Molverhältnis Melamin / Formaldehyd / Veretherungsalkohol 1 : 2,8 : 2, 5 bis 1 : 4,5 : 3, 5.

Diese veretherten Melaminharzoligomere besitzen einen hydrophilen und einen hydrophoben Rest. Aus diesem Grund können sie wie ein Dispergator wirken. Der Vorteil gegenüber der Verwendung von herkömmlichen Dispergatoren ist, dass die Melaminharzoligomeren in Flächengebilde kovalent und somit dauerhaft eingebunden werden.

Die hydrophilen Flächengebilde sind bevorzugt Laminate, Schichtpressstoffe oder einlagige flächige Trägermaterialien auf Basis von Cellulose und/oder polaren Kunststoffen vom Typ Polyamid, Polyester, Polyvinylacetat und/oder Polyvinylalkohol, bevorzugt Papier.

Die hydrophilen Formkörper sind bevorzugt Holzerzeugnisse, oder durch thermoplastische Verarbeitung von polaren Kunststoffen vom Typ Polyamid, Polyester, Polyvinylacetat und/oder Polyvinylalkohol oder durch Verarbeitung von Blends aus 55 bis 90 Masse% Holz und 45 bis 10 Masse% thermoplastischen und/oder duroplastischen Kunststoffen hergestellte Halbzeuge oder Formstoffe.

Beispiele für hydrophile Formkörper sind durch spanende Bearbeitung hergestellte Holzprofile oder gedrechselte Holzgegenstände, oder durch Spritzguss oder Profilextrusion hergestellte Erzeugnisse aus Polyamid oder Polyethylenterephthalat wie Verkleidungselemente, Abdeckungen oder Rundprofile.

Beispiele für thermoplastische Kunststoffe, die in den hydrophilen Formkörpern aus Blends aus 55 bis 90 Masse% Holz und 45 bis 10 Masse% thermoplastischen Kunststoffen enthalten sein können, sind Polyethylen, Polypropylen, Polystyren, Polyamid-6 Polymethylmethacrylat, Poly-2,6-dimethylphenylenoxid und Polybutylenterephthalat.

Beispiele für duroplastische Kunststoffe, die in den hydrophilen Formkörpern aus Blends aus 55 bis 90 Masse% Holz und 45 bis 10 Masse% duroplastischen Kunststoffen enthalten sein können, sind Phenolharze, Harnstoffharze und ungesättigte Polyesterharze.

Die in der wässrigen Phase der erfindungsgemäßen Kunststoffdispersionen enthaltenen latenten Härtungskatalysatoren sind bevorzugt Ammoniumsalze, insbesondere Ammoniumperoxidisulfat, Ammoniumphosphat, Ammoniumsulfat, Ammoniumchlorid, Ammoniumoxalat und/oder Ammoniumrhodanid; C₁-C₄-Alkylammoniumsalze von Carbonsäuren, insbesondere Methylammoniumphthalat, Methylammoniummaleinat und/oder das Methylaminsalz der Naphthalinsulfonsäure; und/oder Ester der Phosphorsäure, phosphorigen Säure, Oxalsäure und/oder Phthalsäure, insbesondere Diethylphosphat, Oxalsäuredimethylester und/oder Phthalsäuredimethylester.

Bevorzugt sind in den wasserunlöslichen Melaminharzvorkondensaten der erfindungsgemäßen Kunststoffdispersionen als saure Härtungskatalysatoren - bei einem Molverhältnis Aldehydkomponente/Melaminkomponente bis 4 : 1 blockierte Sulfonsäuren, aliphatische C₄-C₁₈-Carbonsäuren, Alkalisalze oder Ammoniumsalze der Phosphorsäure, C₁-C₁₂-Alkylester oder C₂-C₈-Hydroxyalkylester von C₆-C₁₄-aromatischen Carbonsäuren oder anorganischen Säuren, Salze von Melamin oder Guanaminen mit C₁₋₁₈-aliphatischen Carbonsäuren, Anhydride, Halbester oder Halbamide von C₄-C₂₀-Dicarbonsäuren, Halbester oder Halbamide von Copolymeren aus ethylenisch unge-sättigten C₄-C₂₀-Dicarbonsäureanhydriden und ethylenisch ungesättigten Monomeren vom Typ C₂-C₂₀-Olefine und/oder C₈-C₂₀-Vinylaromaten, (Meth)acrylsäure-Copolyere und/oder Salze von C₁-C₁₂-Alkylaminen bzw. Alkanolaminen mit C₁-C₁₈-aliphatischen, C₆-C₁₄-aromatischen oder alkylaromatischen Carbonsäuren oder anorganischen Säuren vom Typ Salzsäure, Schwefelsäure oder Phosphorsäure, oder - bei einem Molverhältnis über 4 : 1 starke Säuren, bevorzugt Salzsäure, Schwefelsäure, Phosphorsäure, p-Toluolsulfonsäure, Methansulfonsäure, Dodecylbenzolsulfonsäure, Di-nonylnaphthalinsulfonsäure und/oder Dinonylnaphthalindisulfonsäure, enthalten.

Beispiele für blockierte Sulfonsäuren als saure Härtungskatalysatoren in den wasserunlöslichen Melaminharzvorkondensaten, die ein Molverhältnis Aldehydkomponente/Mela-minkomponente bis 4 : 1 besitzen, sind Benzilmonoxim-tosylat, α-Cyclohexylsulfonyloxy-iminophenylessigsäureethylester, Acetonoxim-p-benzoylbenzolsulfonat, α-(4-Nitrobenzol-sulfonyloxyimino)benzylcyanid, 2-Nitrobenzylsulfonat und 2-Methylsulfonyloxyimino-4-phenyl-but-3-ennitril.

Beispiele für aliphatische C₄-C₁₈-Carbonsäuren als saure Härtungskatalysatoren in den wasserunlöslichen Melaminharzvorkondensaten, die ein Molverhältnis Aldehydkomponente/Melaminkomponente bis 4 : 1 besitzen, sind Buttersäure, Capronsäure, Palmitinsäure, Stearinsäure und Ölsäure.

Beispiele für Alkalisalze oder Ammoniumsalze der Phosphorsäure als saure Härtungskatalysatoren in den wasserunlöslichen Melaminharzvorkondensaten, die ein Molverhältnis Aldehydkomponente/Melaminkomponente bis 4 : 1 besitzen, sind Ammoniumhydrogenphosphat, Natriumpolyphosphat und Kaliumhydrogenphosphat.

Beispiele für C₁-C₁₂-Alkylester oder C₂-C₈-Hydroxyalkylester von C₆-C₁₄-aromatischen Carbonsäuren oder anorganischen Säuren als saure Härtungskatalysatoren in den wasserunlöslichen Melaminharzvorkondensaten, die ein Molverhältnis Aldehydkomponente/ Melaminkomponente bis 4 : 1 besitzen, sind Dibutylphthalat, Phthalsäurediglycolester und/oder Trimellithsäureglycolester.

Beispiele für Salze von Melamin oder Guanaminen mit C₁₋₁₈-aliphatischen Carbonsäuren als saure Härtungskatalysatoren in den wasserunlöslichen Melaminharzvorkondensaten, die ein Molverhältnis Aldehydkomponente/Melaminkomponente bis 4 : 1 besitzen, sind Melaminformiat, Melamincitrat und/oder Acetoguanaminbutyrat.

Beispiele für Anhydride, Halbester oder Halbamide von C₄-C₂₀-Dicarbonsäuren als saure Härtungskatalysatoren in den wasserunlöslichen Melaminharzvorkondensaten, die ein Molverhältnis Aldehydkomponente/ Melaminkomponente bis 4 : 1 besitzen, sind Malein-säureanhydrid, Mono-C₁-C₁₈-alkylmaleate wie Maleinsäuremonobutylester, Maleinsäuremonoethylhexylester oder Monostearylmaleat oder Maleinsäuremono-C₁-C₁₈-alkyl-amide wie , Maleinsäuremonoethylamid, Maleinsäuremonooctylamid oder Maleinsäuremonostearylamid.

Beispiele für Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten als saure Härtungskatalysatoren in den wasserunlöslichen Melaminharzvorkondensaten, die ein Molverhältnis Aldehydkomponente/Melamirikomponente bis 4 : 1 besitzen, sind Halbester oder Halbamide von Copo-lymeren aus Maleinsäureanhydrid und C₃-C₈-α-Olefinen vom Typ Isobuten, Diisobuten und/oder 4-Methylpenten und/oder Styren mit einem Molverhältnis Maleinsäurean-hydrid/C₃-C₈-α-Olefin bzw. Styren bzw. entsprechender Monomermischungen von 1 : 1 bis 1 : 5.

Beispiele für Salze von C₁-C₁₂-Alkylaminen bzw. Alkanolaminen mit C₁-C₁₈-aliphatischen, C₆-C₁₄-aromatischen oder alkylaromatischen Carbonsäuren sowie anorganischen Säuren vom Typ Salzsäure, Schwefelsäure oder Phosphorsäure als saure Härtungskatalysatoren in den wasserunlöslichen Melaminharzvorkondensaten, die ein Molverhältnis Aldehydkomponente/Meiaminkomponente bis 4 : 1 besitzen, sind Ethanolammmoniumchlorid, Triethylammoniummaleat, Diethanolammoniumphosphat und/oder Isopropylammonium-p-toluolsulfonat.

Besonders bevorzugt sind Kunststoffdispersionen, welche als nichtionogene Dispergatoren Ethylenoxid-Propylenoxid-Blockcopolymere, mit C₈-C₁₈-Alkoholen monoveretherte Poly(C₂-C₄-alkylen)oxide, Ester mehrwertiger Alkohole mit C₈-C₁₈-Carbonsäuren, C₂-C₄-Alkylenoxidaddukte an C₈-C₁₈-Fettalkohole und/oder Copolymere aus ethylenisch ungesättigten C₄-C₂₀-Dicarbonsäureanhydriden und ethylenisch ungesättigten Monomeren vom Typ C₂-C₂₀-Olefine, C₈-C₂₀-Vinylaromaten, C₄-C₂₁-Acrylsäureester und/oder C₅-C₂₂-Methacrylsäureester, die mit Aminogruppen-terminierten Poly(C₂-C₄-alkylen)oxiden imidisiert wurden, enthalten.

Beispiele für die in den erfindungsgemäßen Kunststoffdispersionen als nichtionogene Dispergatoren enthaltenen mit C₈-C₁₈-Alkoholen mohoveretherten Poly(C₂-C₄-alkylen)-oxide mit Molmassen von 400 bis 6000 sind Polyethylenglycolmonostearylether und Polyethylenglycolmonododecylether.

Beispiele für die in den erfindungsgemäßen Kunststoffdispersionen als nichtionogene Dispergatoren enthaltenen Ester mehrwertiger Alkohole mit C₈-C₁₈-Carbonsäuren sind Sorbitanfettsäureester und Polyethylenglycolglycerylstearat.

Beispiele für die in den erfindungsgemäßen Kunststoffdispersionen als nichtionogene Dispergatoren enthaltenen C₂-C₄-Alkylenoxidaddukte an C₈-C₁₈-Fettalkohole sind oxethylierte Fettalkohole und oxethylierte Oxoalkohole.

Beispiele für die in den erfindungsgemäßen Kunststoffdispersionen als nichtionogene Dispergatoren enthaltenen Copolymere aus ethylenisch ungesättigten C₄-C₂₀-Dicarbon-säureanhydriden und ethylenisch ungesättigten Monomeren vom Typ C₂-C₂₀-Olefine, C₈-C₂₀-Vinylaromaten, C₄-C₂₁-Acrylsäureester und/oder C₅-C₂₂-Methacrylsäureester, die mit Amino-terminierten Poly(C₂-C₄-alkylen)oxiden imidisiert wurden, sind mit α-Amino-terminierten Polyethylenoxiden imidisierte Maleinsäureanhydrid-Styren-Copolymere oder Maleinsäureanhydrid-α-Methylstyren-Butylacrylat-Copolymere.

Beispiele für anionischen Dispergatoren in den erfindungsgemäßen Kunststoffdispersionen sind Alkylsulfate, oxethylierte Alkylsulfate, Ethersulfate, Alkansulfonate, Olefinsulfonate und Alkylnaphthalinsulfonate.

Bevorzugt werden als anionischen Dispergatoren in den erfindungsgemäßen Kunststoffdispersionen Alkalisalze von (Meth)acrylsäure-Copolymeren, Salze von oxethylierten C₆-C₁₈-Alkylphenol-Sulfaten und/oder Alkali- und/oder Ammoniumsalze von C₈-C₁₈-Carbonsäuren und/oder C₈-C₁₈-Alkylsulfonaten.

Beispiele für die in den erfindungsgemäßen Kunststoffdispersionen als anionische Dispergatoren gegebenenfalls enthaltenen Salze von oxethylierten C₆-C₁₈-Alkylphenol-Sulfaten sind oxethyliertes Natrium-p-nonylphenolsulfat und oxethyliertes Natrium-p-dodecylphenolsulfat.

Beispiele für die in den erfindungsgemäßen Kunststoffdispersionen als anionische Dispergatoren gegebenenfalls enthaltenen Alkali- und/oder Ammoniumsalzen von C₈-C₁₈-Carbonsäuren sind Natriumoleat und Ammoniumpalmitat.

Die Kunststoffdispersionen für die Herstellung von mit hydrophoben Oberflächen ausgerüsteten hydrophilen Flächengebilden oder hydrophilen Formkörpern werden nach einem Mehrstufenverfahren hergestellt, bei dem
- in der ersten Verfahrensstufe Gemische aus hydrophilen Melaminharzvorkondensaten, wasserunlöslichen Melaminharzvorkondensaten und Hydrophoblerungsmitteln als hochviskose Flüssigkeiten oder Schmelzen bei 50 bis 130°C und Verweilzeiten von 2 bis 15 min homogenisiert werden und
- in der zweiten Verfahrensstufe die Mischungen bei hohen Schergeschwindigkeiten und Verweilzeiten von 3 min bis 15 min in 8,7 bis 100 Masse%, bezogen auf die Summe der Melaminharzvorkondensate, Wasser, das 0,5 bis 10 Masse%, bezogen auf die Summe der Melaminharzvorkondensate, Dispergatoren enthält, eingetragen werden und die Dispersionen unter weiterem Rühren bei niedrigen Schergeschwindigkeiten auf Raumtemperatur abgekühlt werden, wobei nach der Abkühlung auf Raumtemperatur latente Härter und saure Härtungskatalysatoren zugesetzt werden.

Dabei ist es bevorzugt, wenn das Wasser in der zweiten Verfahrensstufe 1 bis 25 Masse%, bezogen auf die Gesamtmasse der Melaminharzvorkondensate, C₃-C₆-Alkohole als Dispergierhilfsmittel und/oder wasserlösliche Polymere und/oder wasserlösliche mehrwertige Alkohole enthält und auf Temperaturen bis 90 °C temperiert ist und wenn nach der Abkühlung auf Raumtemperatur Pigmente und/oder Flammschutzmittel zugesetzt werden.

Ein zweites Verfahren zur Herstellung der erfindungsgemäßen Kunststoffdispersionen ist ein Mehrstufenverfahren, bei dem.
- in der ersten Verfahrensstufe wasserunlösliche Melaminharzvorkondensate als hochviskose Flüssigkeiten oder Schmelzen bei 50 bis 130°C bei hohen Schergeschwindigkeiten und Verweilzeiten von 3 min bis 15 , min in 8,7 bis 100 Masse%, bezogen auf die wasserunlöslichen Melaminharzvorkondensate, Wasser, das 0,5 bis 10 Masse%, bezogen auf die wasserunlöslichen Melaminharzvorkondensate, Dispergatoren enthält, eingetragen werden und die Dispersionen unter weiterem Rühren bei niedrigen Schwergeschwindigkeiten auf Raumtemperatur abgekühlt werden und
- in der zweiten Verfahrensstufe zur wässrigen Dispersion der wasserunlöslichen Melaminharzvorkondensate hydrophile Melaminharzvorkondensate als Lösungen zugesetzt und homogenisiert werden, wobei den wässrigen Lösungen latente Härter und saure Härtungskatalysatoren zugesetzt werden.

Dabei ist es bevorzugt, wenn die wasserunlöslichen Melaminharzvorkondensate in der ersten Verfahrensstufe und/oder die wässrigen Lösungen der zweiten Verfahrensstufe bis zu 30 Masse% Hydrophobierungsmittel enthalten und das Wasser in der ersten Verfahrensstufe 1 bis 25 Masse%, bezogen auf die wasserunlöslichen Melaminharzvorkondensate, C₃-C₆-Alkohole als Dispergierhilfsmittel und/oder wasserlösliche Polymere und/oder wasserlösliche mehrwertige Alkohole enthält und auf Temperaturen bis 90 °C temperiert ist und wenn den wässrigen Lösungen der zweiten Verfahrensstufe Pigmente und/oder Flammschutzmittel zugesetzt werden.

Bei einem weiteren Mehrstufenverfahren für die Herstellung der erfindungsgemäßen Kunststoffdispersionen werden
- in der ersten Verfahrensstufe mit C1-C10-Alkoholen veretherte Melaminharze in Gegenwart oder in Abwesenheit von sauren Härtungskatalysatoren mit Polyethylenglykolen mit Molmassen von 500 bis 8000 bei Temperaturen von 50 bis 165 °C zu veretherten Melaminharzoligomeren umgesetzt,
- in der zweiten Verfahrensstufe bei Temperaturen von 60 bis 200°C Mischungen aus 15 bis 40 Masse% veretherten Melaminharzoligomeren und 85 bis 60 Masse% mit C1-C10-Alkoholen veretherten Melaminharzen mit Molekulargewichten von 300 bis 800 bei hohem Schergefälle in Wasser, das auf 20 bis 80°C vortemperiert ist, eingetragen, wobei 0 bis 8 Masse% Hydrophobierungsmittel In der zweiten Verfahrensstufe der Schmelze aus veretherten Melaminharzoligomeren und mit C1-C10-Alkoholen veretherten Melaminharzen und/oder der wässrigen Phase zugesetzt werden, und
- in der dritten Verfahrensstufe 10 bis 40 Masse% hydrophile Melaminharzvorkondensate in Form einer 30 bis 70% igen wässrigen Lösung mit 90 bis 60 Gew% der Mischung aus Melaminharzoligomeren und veretherten Melaminharzen der zweiten Verfahrensstufe gemischt.

Als Dispergatoraggregate mit hoher Scherwirkung sind für alle drei Verfahrensvarianten Inline-Dispergatoren mit Kreislaufführung, Rührreaktoren mit Hochleistungsdispergatoren für Rührgeschwindigkeiten bis 25000 U/min oder Ultraschalldispergatoren geeignet. '

Erfindungsgemäß sind weiterhin mit hydrophoben Oberflächen ausgerüstete hydrophile Flächengebilde oder hydrophile Formkörper, die unter Verwendung der vorbeschriebenen Kunststoffdispersionen hergestellt werden.

Die Aufbringung der erfindungsgemäßen Kunststoffdispersionen auf die hydrophilen Flächengebilde kann nach üblichen Auftragsverfahren wie Walzauftrag, Rakelauftrag, Wirbelbettlackierung, Tauchlackierung, Streich- und Spritzverfahren und elektrostatisches Spritzen erfolgen. Günstige Trocknungs- und Härtungstemperaturen liegen im Bereich von 100 bis 220°C.

Beim Auftragungs- und Trocknungsvorgang erfolgt eine weitgehende Anreicherung der organischen Nanophase an der Beschichtungsoberfläche, so dass die Beschichtungsoberfläche nach der Trocknung und Aushärtung nahezu ausschließlich aus vernetzten Melaminharzen auf Basis der wasserunlöslichen veretherten Metaminharzvorkondensate besteht. Die auf den hydrophilen Flächengebilden oder hydrophilen Formkörpern erzeugte hydrophobe Oberflächenschicht besitzt eine hohe Haftfestigkeit auf den hydrophilen Flächengebilden, da sie beim Vemetzungsvorgang mit den in den hydrophilen Flächengebilden sorbierten Melaminharzen auf Basis der hydrophilen Melaminharzvorkondensate chemisch verknüpft wird.

Bevorzugt beträgt die Dicke der hydrophoben Oberflächen der mit hydrophoben Oberflächen ausgerüstete hydrophilen Flächengebilde oder hydrophilen Formkörper 1 bis 40 µm.

Geringe Schichtdicken der hydrophoben Oberflächen auf den hydrophilen Flächengebilden oder hydrophilen Formkörpern bewirken bei rauhen Oberflächen eine gute Verklebbarkeit der Erzeugnisse und eine hinreichende Wassserdampfpermeabilität.

Bei der Erzeugung der hydrophoben Oberflächen auf den hydrophilen Flächengebilden, ausgenommen Laminate, oder hydrophilen Formkörpern werden die Kunststoffdispersionen bevorzugt nach Vorwärmung der hydrophilen Flächengebilde oder hydrophilen Formkörper auf 50 bis 95°C durch Aufsprühen aufgebracht, und die mit den Kunststoffdispersionen imprägnierten Flächengebilde oder Formkörper werden bei 100 bis 145°C getrocknet und ausgehärtet. Von besonderem Vorteil ist es, Trocknung und Aushärtung durch Infrarotbestrahlung der imprägnierten Flächengebilde oder Formkörper vorzunehmen.

Bei der Herstellung von Laminaten auf Basis von mit hydrophoben Oberflächen beschichteten hydrophilen Flächengebilden erfolgt die Aushärtung bevorzugt nach der üblichen Presstechnologie bei Drücken von 30 bis 150 bar und Temperaturen im Bereich von 140 bis 170°C

Bei Formkörpern wie Profilen, die durch Extrusion von Blends aus 55 bis 90 Masse% Holz und 45 bis 10 Masse% thermoplastischen oder duroplastischen Kunststoffen, oder polaren Kunststoffen vom Typ Polyamid, Polyester, Polyvinylacetat und/oder Polyvinylalkohol hergestellt werden, ist es von Vorteil, für die Erzeugung der hydrophoben Oberflächen die Kunststoffdispersionen auf das Profil direkt nach der Extruderdüse aufzusprühen.

Bevorzugte Einsatzgebiete der mit Kunststoffdispersionen beschichteten Flächengebilde oder Formkörper sind Anwendungen im Bauwesen, insbesondere als Fassadenelemente, sowie im Sport- und Freizeitsektor, bei denen eine verbesserte Bewitterungsresistenz und Verklebbarkeit gefordert werden.

Die Erfindung wird durch nachfolgende Beispiele erläutert:

### Beispiel 1

In einem 2,5 I Rührreaktor werden 330 g eines mit Methanol teilveretherten hydrophilen Melamin-Formaldehyd-Vorkondensats, Molverhältnis Melamin/Formaldehyd/gebundenes Methanol 1 : 3 : 2,1, das 30 g Isobutanol enthält, als hydrophiles Melaminharzvorkondensat, unter Zusatz von 100 g eines imidisierten Styren-Maleinsäureanhydrid-Copolymers (Molverhältnis Styren/Maleinsäureanhydrid 2 : 1, imidisiert mit einer Mischung aus 70 Mol% Octylamin und 30 Mol% Diglycolamin) als Hydrophobierungsmit-tel, bei 120°C aufgeschmolzen und homogenisiert. In die dünnflüssige Schmelze werden innerhalb von 20 min bei 100°C 600 g eines wasserunlöslichen Melaminharz-Vorkondensats, das 2,4,6-Tris(methoxy-methylamino)-1,3,5-triazin als Hauptkomponente im Gemisch mit den entsprechenden höhermolekularen Oligomeren enthält, dosiert und homogenisiert.

Die erhaltene homogene Schmelze wird innerhalb von 15 min in einem 2,5 l - Rührreaktor mit Hochgeschwindigkeitsdispergator (Ultra-Turrax, Fa.

Janke&Kunkel, Staufen), der 990 g Wasser und 18 g einer 75:25 Dispergatormischung aus einem oxethylierten C₁₆-C₁₈-Alkoholgemisch (80 Mol Ethylenoxid/Mol Alkohol) und einem oxethylierten Natrium-pnonylphenol-sulfat (Ethylenoxidanteil 23 Gew.%) bei 70°C enthält, dispergiert, und nach Abkühlung der Emulsion auf 35°C werden 100 g Butanol als Dispergierhilfsmittel, 1,2 g Methylammoniumphthalat als latenter Härter und 8 g Monostearylmaleat als saurer Härtungskatalysator, zugesetzt.

Die mit einem Teilchengrössendetektor (Zeta-Sizer) ermittelte mittlere Teilchengrösse der Nanophase in der Dispersion beträgt 130 nm.

Zur Herstellung eines mit einer hydrophoben Oberfläche ausgerüsteten Dekorpapiers (Flächenmasse 80 g/m²) wird das Dekorpapier mittels einer Rakel mit der Kunststoffdispersion beschichtet. Die ATR-spektroskopische Untersuchung der Dekorpapieroberfläche ergibt einen Anteil der veretherten Hydroxygruppen der Melaminharzvorkondensate von 98 Mol%. Nach der Trocknung im Umluftofen bei 140°C auf eine Flüchte von 5,9 Masse % besitzt das Dekorpapier einen Harzanteil von 56 Masse%.

Nachfolgend wird eine Schicht des beschichteten Dekorpapiers mit 3 Lagen Kernpapier (Flächenmasse 180 g/m², Harzanteil 45 Masse% an Melamin-Formaldehyd-Vorkondensat, Molverhältnis Melamin/Formaldehyd 1 : 1,65) in einer Collin-Laborpresse mit einem spezifischen Druck von 90 bar bei 155°C 180 s zusammengepresst.

Der Randwinkel von destilliertem Wasser an der Laminatoberfläche beträgt 102 grd.

Wird im Vergleichsversuch das mit Methanol teilveretherte hydrophile Melamin-Formaldehyd-Vorkondensat (Molverhältnis Metamin/Formatdehyd/gebundenes Methanol 1 : 3 : 2,1) nach Zusatz von 1 Masse%, bezogen auf das Vorkondensat, Methylammoniumphthalat als latenter Härter auf die Dekorpapieroberfläche aufgetragen, so ergibt die ATR-spektroskopische Untersuchung der Dekorpapieroberfläche einen Anteil der veretherten Hydroxygruppen der Melaminharzvorkondensate von 75 Mol%. Nach Trocknung im Umluftofen bei 140°C auf eine Flüchte von 5,9 Masse% und Laminierung mit Kraftpapier beträgt der Randwinkel von destilliertem Wasser an der Oberfläche des unter analogen Bedingungen hergestellten Laminats 69 grd.

### Beispiel 2

In einem 2,5 1 Rührreaktor wird eine Mischung aus 250 g eines mit Methanol teilveretherten hydrophilen Melamin-Formaldehyd-Vorkondensats, Molverhältnis Melamin/ Formaldehyd/gebundenes Methanol 1 : 3 : 2,1, das 30 g Isobutanol enthält, unter Zusatz von 75 g eines imidisierten Styren-Maleinsäureanhydrid-Copolymers (Molverhältnis Styren/Maleinsäureanhydrid 2,6 : 1, imidisiert mit einer Mischung aus 60 Mol% Octylamin und 40 Mol% Ethanolamin) als Hydrophobierungsmittel, bei 95°C aufgeschmolzen und homogenisiert. In die dünnflüssige Schmelze werden innerhalb von 15 min bei 95°C 500 g eines wasserunlöslichen veretherten Melaminharzvorkondensats, das als Hauptkomponente Bis-2,4(dodecyloxy-methylamino)-6-hydroxymethylamino-1,3,5-triazin im Gemisch mit höhermolekularen Oligomeren enthält, dosiert und homogenisiert.

Die erhaltene homogene Schmelze wird innerhalb von 15 min in einem 2,5 l - Rührreaktor mit Hochgeschwindigkeitsdispergator (Ultra-Turrax, Fa. Janke&Kunkel, Staufen), der 950 g Wasser und 24 g eines oxethylierten Cetylalkohol-Stearylalkohol-Gemischs (27 Mol Ethylenoxid/Mol Alkohol, Molmasse rd. 1450) bei 30°C enthält, dispergiert, und nach Abkühlung der Emulsion auf 20°C werden 80 g lsobutanol als Dispergierhilfsmittel, 3 g Ammoniumoxalat als latenter Härter und 5,4 g Acetoguanaminbutyrat als saurer Härtungskatalysator zugesetzt.

Die mit einem Teilchengrössendetektor (Zeta-Sizer) ermittelte mittlere Teilchengrösse der Nanophase in der Dispersion beträgt 55 nm.

Zur Herstellung eines mit einer hydrophoben Oberfläche ausgerüsteten Dekorpapiers (Flächenmasse 80 g/m²) wird das Dekorpapier mittels einer Rakel mit der Kunststoffdispersion beschichtet. Die ATR-spektroskopische Untersuchung der Dekorpapier-oberfläche ergibt einen Anteil der veretherten Hydroxygruppen der Melaminharzvorkondensate von 70 Mol%. Nach der Trocknung im Umluftofen bei 140°C auf eine Flüchte von 6,1 Masse% besitzt das Dekorpapier einen Harzanteil von 59 Masse%.

Nachfolgend wird eine Schicht des beschichteten Dekorpapiers mit 3 Lagen Kernpapier (Flächenmasse 180 g/m², Harzanteil 45 Masse% an Melamin-Formaldehyd-Vorkondensat, Molverhältnis Melamin/Formaldehyd 1 : 1,65) in einer Collin-Laborpresse mit einem spezifischen Druck von 90 bar bei 155°C 180 s zusammengepresst.

Der Randwinkel von destilliertem Wasser an der Laminatoberfläche beträgt 102 grd.

Wird im Vergleichsversuch ein mit Methanol teilverethertes hydrophiles Melamin-Formaldehyd-Vorkondensat, Molverhältnis Melamin/ Formaldehyd/gebundenes Methanol 1 : 3 : 2,1, das 30 g Isobutanol enthält, nach Zusatz von 1 Masse%, bezogen auf das Vorkondensat, Ammoniumoxalat als latenter Härter, auf die Dekorpapieroberfläche aufgetragen, so ergibt die ATR-spektroskopische Untersuchung der Dekorpapieroberfläche einen Anteil der veretherten Hydroxygruppen der Melaminharzvorkondensate von 51 Mol%. Nach Trocknung im Umluftofen bei 140°C auf eine Flüchte von 5,9 Masse% und Laminierung mit Kraftpapier beträgt der Randwinkel von destilliertem Wasser an der Oberfläche des unter analogen Bedingungen hergestellten Laminats 65 grd.

### Beispiel 3

In einem 2,5 l Rührreaktor wird eine Mischung aus 260 g eines mit Methanol teilveretherten hydrophilen Melamin-Formaldehyd-Vorkondensats, Molverhältnis Melamin/Formaldehyd/gebundenes Methanol 1 : 5 : 3,2, 600 g eines wasserunlöslichen Vorkondensats, das als Hauptkomponente 2,4-Bis(methoxymethylamino)-6-butoxymethyl-amino-1,3,5-triazin im Gemisch mit höhermolekularen Oligomeren enthält, und 40 g Polytetrafluorethylenpartikel (mittlerer Partikeldurchmesser 30 nm) bei 90°C aufgeschmolzen und homogenisiert.

Die erhaltene Schmelze wird innerhalb von 5 min in einem 2,5 I - Rührreaktor mit Hochgeschwindigkeitsdispergator (Ultra-Turrax, Fa. Janke&Kunkel, Staufen), der 850 g Wasser und 17 g oxethylierten Oleylalkohol (80 Mol Ethylenoxid/Mol Oleylalkohol) bei 65°C enthält, dispergiert, und nach Abkühlung der Emulsion auf 35°C werden 2,9 g Ammoniumphosphat als latenter Härter und 8 g Phthalsäurediglycolester als saurer Härtungskatalysator zugesetzt.

Die mit einem Teilchengrössendetektor (Zeta-Sizer) ermittelte mittlere Teilchengrösse der Nanophase in der Dispersion beträgt 55 nm.

Zur Herstellung eines mit einer hydrophoben Oberfläche ausgerüsteten Dekorpapiers (Flächenmasse 80 g/m²) wird das Dekorpapier mittels einer Rakel mit der Kunststoffdispersion beschichtet. Die ATR-spektroskopische Untersuchung der Dekorpapieroberfläche ergibt einen Anteil der veretherten Hydroxygruppen der Melaminharzvorkondensate von 95 Mol%. Nach Trocknung der Dekorfolie im Umluftofen bei 140°C auf eine Flüchte von 5,7 Masse% besitzt das Dekorpapier einen Harzanteil von 58 Masse%.

Nachfolgend wird eine Schicht des beschichteten Dekorpapiers mit 3 Lagen Kempapier (Flächenmasse 180 g/m², Harzanteil 45 Masse% an Melamin-Formaldehyd-Vorkondensat, Molverhältnis Melamin/Formaldehyd 1: 1,65) in einer Collin-Laborpresse mit einem spezifischen Druck von 90 bar bei 160°C 150 s zusammengepresst.

Der Randwinkel von destilliertem Wasser an der Laminatoberfläche beträgt 94 grd.

Wird im Vergleichsversuch ein mit Methanol teilverethertes hydrophiles Melamin-Formaldehyd-Vorkondensat, Molverhältnis Melamin/Formaldehyd/gebundenes Methanol 1 : 5 : 3,2, das 1 Masse%, bezogen auf das Vorkondensat, Ammoniumphosphat als latenten Härter enthält, auf die Dekorpapieroberfläche aufgetragen, so ergibt die ATR-spektroskopische Untersuchung der Dekorpapieroberfläche einen Anteil der veretherten Hydroxygruppen der Melaminharzvorkondensate von 65 Mol%. Nach Trocknung im Umluftofen bei 140°C auf eine Flüchte von 5,7 Masse% ergibt sich ein Randwinkel von destilliertem Wasser an der Oberfläche des unter analogen Bedingungen hergestellten Laminats beträgt 58 grd.

### Beispiel 4

In einem 2,5 I Rührreaktor wird eine Mischung aus 320 g eines mit Methanol teilveretherten hydrophilen Melamin-Formaldehyd-Vorkondensats, Molverhältnis Melamin/Formaldehyd/gebundenes Methanol 1 : 3 : 2,1, 650 g eines wasserunlöslichen Melaminharz-Vorkondensats, das als Hauptkomponente 2,4-Bis(dioctyloxymethyl-imino)-6-hydroxy-methylamino-1,3,5-triazin in Gemisch mit höhermolekularen Oligomeren enthält, und 35 g Hydroxypropyl-terminiertem Polydimethylsiloxan (Molmasse 3000) bei 100°C aufgeschmolzen und homogenisiert.

Die erhaltene homogene Schmelze wird innerhalb von 8 min in einem 2,5 1 - Rührreaktor mit Hochgeschwindigkeitsdispergator (Ultra-Turrax, Fa. Janke&Kunkel, Staufen), der 810 g Wasser und 24 g eines Propylenoxid-Ethylenoxid-Blockcopolymers (Ethylenoxidanteil 77 Gew.%) bei 50°C enthält, dispergiert, und nach Abkühlung der Emulsion auf 20°C werden 3 g Ammoniumperoxidisulfat als latenter Härter und 3,5 g p-Toluölsutfonsäure als saurer Härtungskatalysator zugesetzt.

Die mit einem Teilchengrössendetektor (Zeta-Sizer) ermittelte mittlere Teilchengrösse der Nanophase in der Dispersion beträgt 90 nm.

Zur Herstellung eines mit einer hydrophoben Oberfläche ausgerüsteten Dekorpapiers (Flächenmasse 80 g/m²) wird das Dekorpapier mittels einer Rakel mit der Kunststoffdispersion beschichtet. Die ATR-spektroskopische Untersuchung der Dekorpapieroberfläche ergibt einen Anteil der veretherten Hydroxygruppen der Melaminharzvorkondensate von 72 Mol%. Nach Trocknung im Umluftofen bei 140°C auf eine Flüchte von 5,9 Masse% besitzt das Dekorpapier einen Harzanteil von 56 Masse%.

Nachfolgend wird eine Schicht des beschichteten Dekorpapiers mit 3 Lagen Kernpapier (Flächenmasse 180 g/m², Harzanteil 45 Masse% an Melamin-Formaldehyd-Vorkondensat, Molverhältnis Melamin/Formaldehyd 1 : 1,65) in einer Collin-Laborpresse mit einem spezifischen Druck von 90 bar bei 155°C 130 s zusammengepresst.

Der Randwinkel von destilliertem Wasser an der Laminatoberfläche beträgt 101 grd.

Wird im Vergleichsversuch ein mit Methanol teilverethertes hydrophiles Melamin-Formaldehyd-Vorkondensat, Molverhältnis Melamin/Formaldehyd/gebundenes Methanol 1 : 3 : 2,1, das 1 Masse%, bezogen auf das Vorkondensat, Ammoniumperoxidisulfat als latenten Härter enthält, auf die Dekorpapieroberfläche aufgetragen, so ergibt die ATR-spektroskopische Untersuchung der Dekorpapieroberfläche einen Anteil der veretherten Hydroxygruppen der Melaminharzvorkondensate von 64 Mol%. Nach Trocknung im Umluftofen bei 140°C auf eine Flüchte von 5,7 Masse% ergibt sich ein Randwinkel von destilliertem Wasser an der Oberfläche des unter analogen Bedingungen hergestellten Laminats beträgt 57 grd.

### Beispiel 5

In einem 2,5 l Rührreaktor werden 330 g eines mit Methanol teilveretherten hydrophilen Melamin-Formaldehyd-Vorkbndensats, Molverhältnis Melamin/Formaldehyd/gebundenes Methanol 1 : 3 : 2,1, das 30 g Isobutanol enthält, als hydrophiles Melaminharzvorkon-densat, unter Zusatz von 12,3 g Aminopropyl-terminiertem Polydimethylsiloxan (Molmasse 3000, Amingehalt 1,1 Mol%) als Hydrophobierungsmittel, bei 108°C aufgeschmolzen und homogenisiert. In die dünnflüssige Schmelze werden innerhalb von 20 min bei 108°C 600 g eines wasserunlöslichen Melaminharz-Vorkondensats, das 2,4,6-Tris(methoxymethylamino)-1,3,5-triazin als Hauptkomponente im Gemisch mit den entsprechenden höhermolekularen Oligomeren enthält, dosiert und homogenisiert.

Die erhaltene homogene Schmelze wird innerhalb von 15 min in einem 2,5 I-Rührreaktor mit Hochgeschwindigkeitsdispergator (Ultra-Turrax, Fa. Janke&Kunkel, Staufen), der 990 g Wasser und 18 g einer 75:25 Dispergatormischung aus einem oxethylierten C₁₆-C₁₈-Alkoholgemisch (80 Mol Ethylenoxid/Mol Alkohol) und einem oxethylierten Natriurn-pnonylphenolsulfat (Ethylenoxidanteil 23 Gew.%) bei 70°C enthält, dispergiert, und nach Abkühlung der Emulsion auf 35°C werden 100 g Butanol als Dispergierhilfsmittel, 1,2 g Methylammoniumphthalat als latenter Härter und 8 g Monostearylmaleat als saurer Härtungskatalysator, zugesetzt.

Die mit einem Teilchengrössendetektor (Zeta-Sizer) ermittelte mittlere Teilchengrösse der Nanophase in der Dispersion beträgt 50 nm,

Zur Herstellung eines mit einer hydrophoben Oberfläche ausgerüsteten Dekorpapiers (Flächenmasse 80 g/m²) wird das Dekorpapier mittels einer Rakel mit der Kunststoffdispersion beschichtet. Die ATR-spektroskopische Untersuchung der Dekorpapieroberfläche ergibt einen Anteil der veretherten Hydroxygruppen der Melaminharzvorkondensate von 98 Mol%. Nach der Trocknung im Umluftofen bei 140°C auf eine Flüchte von 5,9 Masse % besitzt das Dekorpapier einen Harzanteil von 56 Masse%.

Nachfolgend wird eine Schicht des beschichteten Dekorpapiers mit 3 Lagen Kernpapier (Flächenmasse 180 g/m², Harzanteil 45 Masse% an Melamin-Formaldehyd-Vorkondensat, Molverhältnis Melamin/Formaldehyd 1 : 1,65) in einer Collin-Laborpresse mit einem spezifischen Druck von 90 bar bei 155°C 170 s zusammengepresst.

Der Randwinkel von destilliertem Wasser an der Laminatoberfläche beträgt 108 grd.

Wird im Vergleichsversuch das mit Methanol teilveretherte hydrophile Melamin-Formaldehyd-Vorkondensat (Molverhältnis Melamin/Formaldehyd/gebundenes Methanol 1 : 3 : 2,1) nach Zusatz von 1 Masse%, bezogen auf das Vorkondensat, Methylammoniumphthalat als latenter Härter auf die Dekorpapieroberfläche aufgetragen, so ergibt die ATR-spektroskopische Untersuchung der Dekorpapieroberfläche einen Anteil der veretherten Hydroxygruppen der Melaminharzvorkondensate von 74 Mol%. Nach Trocknung im Umluftofen bei 140°C auf eine Flüchte von 5,9 Masse% und Laminierung mit Kraftpapier beträgt der Randwinkel von destilliertem Wasser an der Oberfläche des unter analogen Bedingungen hergestellten Laminats 68 grd.

### Beispiel 6

In einem 2,5 I Rührreaktor werden 360 g eines mit Methanol vollständig veretherten niedermolekularen Melamin-Formaldehyd-Vorkondensates (Molverhältnis Melamin/Formaldehyd/Methanol = 1:3:3) unter Zusatz von 20 g oberflächenfluorierter hochdisperser Kieselsäure (mittlere Korngröße 12 nm) bei 105°C aufgeschmolzen und als Schmelze in 355 g Wasser, das auf 45°C erwärmt wurde und 6,5 g eines oxethylierten C₁₆-C₁₈ Alkoholgemisches (80 Mol Ethylenoxid pro Mol Alkohol) als Dispergator enthält, mittels eines Hochgeschwindigkeitsdispergators (Ultra-Turrax, Fa. Janke&Kunkel, Staufen), eingemischt. Nach Abkühlung auf 28°C werden zunächst 80 g einer 50%igen wässrigen Mischung eines Vorkondensates auf Basis eines Melamin-Formaldehyd-Tränkharzes (Molverhältnis Melamin/Formaldehyd = 1:1,69) und schliesslich noch 1,15 g eines Blockcopolymeren aus Ethylenoxid und Dimethylsiloxan (Ethylenoxid-Anteil ca. 20 Gew.%; Molmasse ca. 950) zugefügt und homogen verteilt. Es entsteht eine lagerstabile dünnflüssige Mischung, die nach Zusatz von 2,5 g Maleinsäure als Tränkharz für Dekorpapier verwendet wird.

Die mit einem Teilchengrössendetektor (Zeta-Sizer) ermittelte mittlere Teilchengrösse der Nanophase in der Dispersion beträgt 120 nm.

Zur Herstellung eines mit einer hydrophoben Oberfläche ausgerüsteten Dekorpapiers (Flächenmasse 80 g/m²) wird das Dekorpapier mittels einer Rakel mit der Kunststoffdispersion beschichtet. Die ATR-spektroskopische Untersuchung der Dekorpapieroberfläche ergibt einen Anteil der veretherten Hydroxygruppen der Melaminharzvorkondensate von 99 Mol%. Nach der Trocknung im Umluftofen bei 140°C auf eine Flüchte von 5,4 Masse % besitzt das Dekorpapier einen Harzanteil von 48 Masse%.

Nachfolgend wird eine Schicht des beschichteten Dekorpapiers mit 3 Lagen Kempapier (Flächenmasse 180 g/m², Harzanteil 48 Masse% an Melamin-Formaldehyd-Vorkondensat, Molverhältnis Melamin/Formaldehyd 1 : 1,65) in einer Collin-Laborpresse mit einem spezifischen Druck von 90 bar bei 150°C 180 s zusammengepresst.
Der Randwinkel von destilliertem Wasser an der Laminatoberfläche beträgt 98 grd.

### Beispiel 7

Die Herstellung der Emulsion nach Beispiel 6 wird wiederholt. Es werden jedoch bei gleicher Ansatzgröße 3,5 g des Ethylenoxid-Dimethylsiloxan-Blockcopolymers zugefügt. Zu 400 g dieser Emulsion werden nun unter Verwendung eines Hochgeschwin-digkeitsdispergators (Ultra-Turrax, Fa. Janke&Kunkel, Staufen), 3,5 g Maleinsäuremo-nobutylether anstelle von Maleinsäure als Härter zugesetzt. 400g dieser Emulsion werden mit 800g einer 50%igen wässrigen Vorkondensatlösung auf Basis eines nichtveretherten Melamin-Formaldehyd-Tränkharzes (Molverhältnis Melamin/Formaldehyd = 1:1,65) unter Verwendung eines einfachen Rührers vermischt und unmittelbar zum Imprägnieren eines Dekorpapieres (Flächenmasse 110g/m²) eingesetzt.

Die mit einem Teilchengrössendetektor (Zeta-Sizer) ermittelte mittlere Teilchengrösse der Nanophase in der Dispersion beträgt 125 nm.
Die ATR-spektroskopische Untersuchung der Dekorpapieroberfläche ergibt einen Anteil der veretherten Hydroxygruppen der Melaminharzvorkondensate von 98 Mol%. Nach der Trocknung im Umluftofen bei 140°C auf eine Flüchte von 5,5 Masse % besitzt das Dekorpapier einen Harzanteil von 51 Masse%.

Nachfolgend wird eine Schicht des beschichteten Dekorpapiers mit 3 Lagen Kernpapier (Flächenmasse 180 g/m², Harzanteil 48 Masse% an Melamin-Formaldehyd-Vorkondensat, Molverhältnis Melamin/Formaldehyd 1 : 1,65) in einer Collin-Laborpresse mit einem spezifischen Druck von 90 bar bei 150°C 180 s zusammengepresst.

Der Randwinkel von destilliertem Wasser an der Laminatoberfläche beträgt 96 grd.

### Beispiel 8

Die Emulsion wurde analog Beispiel 6 hergestellt, jedoch wurde kein Polysiloxan-Blockcopolymer und Maleinsäure zugesetzt.

Zu 360 g des veretherten Harzes nach Beispiel 6 werden 90 g einer 1:1 Mischung aus einem imidisierten Styren-Maleinsäureanhydrid-Copolymer (Molverhältnis Styren/MSA = 2:1; imidisiert mit einer Mischung aus 60 Mol% Dodecylamin und 40 Mol% Ethanolamin) und Dipropylenglykolmonobutylether zugesetzt und bei 110°C aufgeschmolzen. Danach gleiche Vorgehensweise wie in Beispiel 6. Die dünnflüssige stabile Emulsion wird anschließend mit 600 g einer 50%igen wässrigen Vorkondensatlösung auf Basis eines nichtveretherten Tränkharzes (Molverhältnis Melamin/Formaldehyd = 1:1,65) unter Verwendung eines einfachen Rührers vermischt und unmittelbar zum Imprägnieren eines Dekorpapieres (Flächenmasse 80 g/m²) eingesetzt. Die mit einem Teilchengrössendetektor (Zeta-Sizer) ermittelte mittlere Teilchengrösse der Nanophase in der Dispersion beträgt 95 nm. Als Härter wird Maleinsäuremonobutylether in einer Menge von 3 g (0,6 Masse% bezogen auf Gesamtharz-Feststoff) eingesetzt.
Die ATR-spektroskopische Untersuchung der Dekorpapieroberfläche ergibt einen Anteil der veretherten Hydroxygruppen der Melaminharzvorkondensate von 97 Mol%. Nach der Trocknung im Umluftofen bei 140°C auf eine Flüchte von 5,4 Masse % besitzt das Dekorpapier einen Harzanteil von 50 Masse%.
Nachfolgend wird eine Schicht des beschichteten Dekorpapiers mit 3 Lagen Kernpapier (Flächenmasse 180 g/m², Harzanteil 48 Masse% an Melamin-Formaldehyd-Vorkondensat, Molverhältnis Melamin/Formaldehyd 1 : 1,65) in einer Collin-Laborpresse mit einem spezifischen Druck von 90 bar bei 150°C 180 s zusammengepresst.

Der Randwinkel von destilliertem Wasser an der Laminatoberfläche beträgt 94 grd.

### Beispiel 9

In einem 2,5 I Rührreaktor werden 360 g eines mit Methanol vollständig veretherten niedermolekularen Melamin-Formaldehyd-Vorkondensates (Molverhältnis Melamin/Formaldehyd/Methanol = 1:3:3) bei 110°C aufgeschmolzen und als Schmelze in 365 g Wasser, das auf 50°C erwärmt wurde und 6 g eines oxethylierten C₁₆-C₁₈ Alkoholgemisches (72 Mol Ethylenoxid pro Mol Alkohol) als Dispergator enthält, mittels eines Hochgeschwindigkeitsdispergators (Ultra-Turrax, Fa. Janke&Kunkel, Staufen), ein-gemischt. Nach Abkühlung auf 25°C werden zunächst 70 g einer 50%igen wässrigen Mischung eines Vorkondensates auf Basis eines Melamin-Formaldehyd-Tränkharzes (Molverhältnis Melamin/Formaldehyd = 1:1,8) und schließlich noch 10 g einer wässrigen Dispersion von Polytetrafluorethylen-Nanopartikeln (Feststoffgehalt 60 Masse%, mittlerer Partikeldurchmesser 75 nm) zugefügt und homogen verteilt. Es entsteht eine lagerstabile dünnflüssige Mischung, die nach Zusatz von 3 g Maleinsäure als Tränkharz für Dekorpapier verwendet wird.
Die mit einem Teilchengrössendetektor (Zeta-Sizer) ermittelte mittlere Teilchengrösse der Nanophase in der Dispersion beträgt 105 nm.
Zur Herstellung eines mit einer hydrophoben Oberfläche ausgerüsteten Dekorpapiers (Flächenmasse 80 g/m²) wird das Dekorpapier mittels einer Rakel mit der Kunststoffdispersion beschichtet. Die ATR-spektroskopische Untersuchung der Dekorpapieroberfläche ergibt einen Anteil der veretherten Hydroxygruppen der Melaminharzvorkondensate von 98 Mol%. Nach der Trocknung im Umluftofen bei 145°C auf eine Flüchte von 5,2 Masse % besitzt das Dekorpapier einen Harzanteil von 52 Masse%.
Nachfolgend wird eine Schicht des beschichteten Dekorpapiers mit 3 Lagen Kernpapier (Flächenmasse 180 g/m², Harzanteil 48 Masse% an Melamin-Formaldehyd-Vorkonden-sat, Molverhältnis Meiamin/Formaidehyd 1: 1,65) in einer Collin-Laborpresse mit einem spezifischen Druck von 90 bar bei 155°C 200 s zusammengepresst.

Der Randwinkel von destilliertem Wasser an der Laminatoberfläche beträgt 106 grd.

### Beispiel 10

In den Einzugstrichter eines Wemer&Pfleiderer - extruders ZSK 30 mit Vakuumentgasung, Profildüse 6 x 6 mm und Bandabzugseinrichtung, Temperaturprofil 90/140/185/210/200/165, wird mit 6,2 kg/Std. Holzmehl (Restfeuchte 7 Masse%, mittlerer Partikeldurchmesser 100 µm, Zusammensetzung 90 Masse% Fichte und 10 Masse% Tanne, pH-Wert 5,5 bei 100g/l in H₂O und 20°C) und mit 3,8 kg/Std. ein mit 0,2 Masse% Maleinsäureanhydrid modifiziertes Buten-Ethylen-Copolymer (Schmelzindex 0,85 g/10 min bei 190°C/5kg, mittlere Korngröße 0,08 mm) dosiert, aufgeschmolzen, homogenisiert, entgast und als Vierkantprofil ausgetragen. Vor Ablage auf die Bandabzugseinrichtung wird das Vierkantprofil durch einen Ringdüsensprühkopf geführt und mit der Kunststoffdispersion nach Beispiel 1 beschichtet.

Der Randwinkel von destilliertem Wasser an der Oberfläche des beschichteten Vier-kantprofils aus dem Holzpulver-Polyolefin-Blend beträgt 90 grd.

## Patentansprüche

1. Kunststoffdispersionen zur Herstellung von mit hydrophoben Oberflächen ausgerüsteten hydrophilen Flächengebilden oder hydrophilen Formkörpern, **dadurch gekennzeichnet, dass** die Kunststoffdispersionen aus
a) einer wässrigen Phase aus Lösungen von hydrophilen Melaminharzvorkondensaten und latenten Härtungskatalysatoren in Wasser oder in Mischungen aus Wasser und C₁-C₆-Alkoholen und
b) einer organischen Nanophase in Form von Nanotröpfchen und/oder Nanopartikeln aus 70 bis 99 Masse% wasserunlöslichen veretherten Melaminharzvorkondensaten, die saure Härtungskatalysatoren und Hydrophobierungsmittel enthalten und
c) Dispergatoren in einer Konzentration von 1 bis 10 Masse%, bezogen auf die Gesamtmasse der Melaminharzvorkondensate bestehen,
wobei in den Kunststoffdispersionen das Verhältnis hydrophile Melaminharzvorkondensate zu wasserunlösliche veretherte Melaminharzvorkondensate 10:1 bis 1:10 und der Wassergehalt der Kunststoffdispersionen 8 bis 50 Masse% ist.

2. Kunststoffdispersionen nach Anspruch 1, **dadurch gekennzeichnet, dass** 0,1 bis 5 Masse% Pigmente und/oder 0,1 bis 5 Masse% Flammschutzmittel, jeweils bezogen auf die Gesamtmasse der Melaminharzvorkondensate, enthalten sind.

3. Kunststoffdispersionen nach Anspruch 1 oder 2, **dadurch gekennzeichnet, dass** die Melaminharzvorkondensate in der wässrigen und in der organischen Phase auf Basis von Melamin und Formaldehyd sind.

4. Kunststoffdispersionen nach mindestens einem der vorher genannten Ansprüche, **dadurch gekennzeichnet, dass** die Konzentration der Härtungskatalysatoren 0,05 bis 3 Masse%, bezogen auf die Melaminharzvorkondensate beträgt.

5. Kunststoffdispersionen nach mindestens einem der vorher genannten Ansprüche, **dadurch gekennzeichnet, dass** in den hydrophilen Melaminharzvorkondensaten das Molverhältnis Aldehydkomponente Melaminkomponente 1,6 : 1 bis 4,5 : 1 und die Konzentration der hydrophilen Melaminharzvorkondensate in der wässrigen Phase 10 bis 50 Masse% ist.

6. Kunststoffdispersionen nach mindestens einem der vorher genannten Ansprüche, **dadurch gekennzeichnet, dass** die hydrophilen Melaminharzvorkondensate partiell mit C₁-C₄-Alkoholen veretherte Melaminharzvorkondensate und/oder nicht veretherte Melaminharzvorkondensate sind und ,dass das Mischungsverhältnis in den Mischungen aus Wasser und C₁-C₆-Alkoholen 95 : 5 bis 5 : 95 beträgt.

7. Kunststoffdispersionen nach Anspruch 6, **dadurch gekennzeichnet, dass** der Anteil der nicht mit C₁-C₄-Alkoholen veretherten Hydroxygruppen der partiell mit C₁-C₄-Alkoholen veretherten Melaminharzvorkondensate 5 bis 75 Mol%, bezogen auf die Summe von Hydroxygruppen und C₁-C₄-Alkoxygruppen in den partiell mit C₁-C₄-Alkoholen veretherten Melaminharzvorkondensaten, beträgt.

8. Kunststoffdispersionen nach mindestens einem der vorher genannten Ansprüche, **dadurch gekennzeichnet, dass** die wässrige Phase 1 bis 20 Masse%, bezogen auf die hydrophilen Melaminharzvorkondensate, weitere wasserlösliche Polymere und/oder wasserlösliche mehrwertige Alkohole mit Molmassen von 62 bis 5000 enthält.

9. Kunststoffdispersionen nach mindestens einem der vorher genannten Ansprüche, **dadurch gekennzeichnet, dass** die wasserunlöslichen veretherten Melaminharzvorkondensate mit C₁-C₄-Alkoholen, C₂-C₂₀-Diolen und/ oder Polyalkylenoxiden mit Molmassen von 250 bis 5000 vollständig veretherte Melaminharvorkondensate und/oder mit C₅-C₁₈-Alkoholen, C₂-C₂₀-Diolen und/oder Polyalkylenoxiden mit Molmassen von 250 bis 5000 partiell veretherte Melaminharzvorkondensate sind.

10. Kunststoffdispersionen nach mindestens einem der vorher genannten Ansprüche, **dadurch gekennzeichnet, dass** in den wasserunlöslichen veretherten Melaminharzvorkondensaten das Molverhältnis Aldehydkomponente / Melaminkomponente 3 : 1 bis 6 : 1 ist und dass der mittlere Durchmesser der Nanotröpfchen oder Nanopartikel 50 bis 300 nm beträgt.

11. Kunststoffdispersionen nach mindestens einem der vorher genannten Ansprüche, **dadurch gekennzeichnet, dass** die organische Nanophase 0,1 bis 2 Masse%, Stabilisatoren, 1 bis 20 Masse% wasserunlösliche mehrwertige Alkohole mit Molmassen von 134 bis 5000 und/oder 1 bis, 30 Masse% Schichtsilikate, jeweils bezogen auf die, wasserunlöslichen veretherten Melaminharzvorkondensate, enthält.

12. Kunststoffdispersionen nach mindestens einem der vorher genannten Ansprüche, **dadurch gekennzeichnet, dass** die Hydrophobierungsmittel organische Siliciumverbindungen vom Typ Organosilanole, Organosiloxane, Organosilane, Organoaminosilane, Aminoendgruppen- oder Hydroxyendgruppenterminierte Polyorganosiloxane; oberflächen-fluorierte SiO₂-Nanopartikeln, Polytetrafluorethylen-Nanopartikel und/oder Imidgruppen enthaltende Copolymeren von ethylenisch ungesättigten C₄-C₂₀-Dicarbonsäureanhydriden sind.

13. Kunststoffdispersionen nach mindestens einem der vorher genannten Ansprüche, **dadurch gekennzeichnet, dass** als Dispergatoren nichtionogene Dispergatoren oder Mischungen aus 50 bis 99 Masse% nichtionogenen und 1 bis 50 Masse% anionischen Dispergatoren eingesetzt werden.

14. Kunststoffdispersionen nach mindestens einem der Ansprüche 1 bis 12, **dadurch gekennzeichnet, dass** als Dispergatoren veretherte Melaminharzoligomere mit Molmassen von 2000 bis 30000 eingesetzt werden.

15. Kunststoffdispersionen nach Anspruch 14, **dadurch gekennzeichnet, dass** die veretherten Melaminharzoligomere mit Polyethylenglykolen mit Molmassen von 1000 bis 8000 und/oder C1-C12 monoalkylveretherten Polyethylenglykolen mit Molmassen von 1000 bis 8500 und C1-C10 Alkoholen veretherte Melaminharzoligomere sind.

16. Kunststoffdispersionen nach Anspruch 15, **dadurch gekennzeichnet, dass** das Molverhältnis Polyethylenglykol / C1-C10-Alkohol 1 : 10 bis 2 : 1 und das Molverhältnis Melamin / Formaldehyd / Veretherungsalkohol 1 : 2,8 : 2, 5 bis 1 : 4,5 : 3, 5 beträgt.

17. Kunststoffdispersionen nach mindestens einem der vorher genannten Ansprüche, **dadurch gekennzeichnet, dass** die hydrophilen Flächengebilde Laminate, Schichtpressstoffe oder flächige Trägermaterialien auf Basis von Cellulose, bevorzugt Papier, Holz, und/oder polaren Kunststoffen vom Typ Polyamid, Polyester, Polyvinylacetat und/oder Polyvinylalkohol, sind.

18. Kunststoffdispersionen nach mindestens einem der vorher genannten Ansprüche, **dadurch gekennzeichnet, dass** die hydrophilen Formkörper Holzerzeugnisse, durch thermoplastische Verarbeitung von polaren Kunststoffen vom Typ Polyamid, Polyester, Polyvinylacetat und/oder Polyvinylalkohol oder durch Verarbeitung von Blends aus 55 bis 90 Masse% Holz und 45 bis 10 Masse% thermoplastischen und/oder duroplastischen Kunststoffen hergestellte Halbzeuge oder Formstoffe sind.

19. Kunststoffdispersionen nach mindestens einem der vorher genannten Ansprüche, **dadurch gekennzeichnet, dass** die in der wässrigen Phase enthaltenen latenten Härtungskatalysatoren Ammoniumsalze, bevorzugt Ammoniumperoxidisulfat, Ammoniumphosphat, Ammoniumsulfat, Ammoniumchlorid, Ammoniumoxalat und/oder Ammoniumrhodanid; C₁-C₄-Alkylammoniumsalze von Carbonsäuren, bevorzugt Methylammoniumphthalat, Methylammoniummaleinat und/oder das Methylaminsalz der Naphthalinsulfonsäure, und/oder Ester der Phosphorsäure, phosphorigen Säure, Oxalsäure und/oder Phthalsäure, bevorzugt Diethylphosphat, Oxalsäuredimethylester und/oder Phthalsäuredimethylester sind.

20. Kunststoffdispersionen nach mindestens einem der vorher genannten Ansprüche, **dadurch gekennzeichnet, dass** als saure Härtungskatalysatoren in den wasserunlöslichen Melaminharzvorkondensaten
- bei einem Molverhältnis Aldehydkomponente/Melaminkomponente bis 4 : 1 blockierte Sulfonsäuren, aliphatische C₄-C₁₈-Carbonsäuren, Alkalisalze oder Am-moniumsalze der Phosphorsäure, C₁-C₁₂-Alkylester oder C₂-C₈-Hydroxyalkylester von C₆-C₁₄-aromatischen Carbonsäuren oder anorganischen Säuren, Salze von Melamin oder Guanaminen mit C₁₋₁₈-aliphatischen Carbonsäuren, Anhydride, Halbester oder Halbamide von C₄-C₂₀-Dicarbonsäuren, Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten, (Meth)acrylsäure-Copolyere und/oder Salze von C₁-C₁₂-Alkylaminen bzw. Alkanolaminen mit C₁-C₁₈-aliphatischen, C₆-C₁₄-aromatischen oder alkylaromatischen Carbonsäuren oder anorganischen Säuren vom Typ Salzsäure, Schwefelsäure oder Phosphorsäure, oder
- bei einem Molverhältnis über 4 : 1 starke Säuren, bevorzugt Salzsäure, Schwefelsäure, Phosphorsäure, p-Toluolsulfonsäure, Methansulfonsäure, Dodecylbenzolsulfonsäure, Dinonylnaphthalinsulfonsäure und/oder Dinonylnaphthalindisulfonsäure,
eingesetzt werden.

21. Kunststoffdispersionen nach Anspruch 13, **dadurch gekennzeichnet, dass** die nichtionogenen Dispergatoren Ethylenoxid-Propylenoxid-Blockcopolymere, mit C₈-C₁₈-Alkoholen monoveretherte Poly(C₂-C₄-alkylen)oxide, Ester mehrwertiger Alkohole mit C₈-C₁₈-Carbonsäuren, C₂-C₄-Alkylenoxidaddukte an C₈-C₁₈-Fettalkohole und/oder Copolymere aus ethylenisch ungesättigten C₄-C₂₀-Dicarbonsäureanhydriden und ethylenisch ungesättigten Monomeren vom Typ C₂-C_{2O}-Olefine, C₈-C₂₀-Vinylaromaten, C₄-C₂₁-Acryisäureester und/oder C₅-C₂₂-Methacrylsäureester, die mit Aminogruppen-terminierten Poly(C₂-C₄-alkylen)oxiden imidisiert wurden, sind.

22. Kunststoffdispersionen nach Anspruch 13, **dadurch gekennzeichnet, dass** die anionischen Dispergatoren Alkalisalze von (Meth)acrylsäure-Copolymeren, Salze von oxethylierten C₆-C₁₈-Alkylphenol-Sulfaten und/oder Alkali- und/oder Ammoniumsalze von C₈-C₁₈-Carbohsäuren und/oder C₈-C₁₈-Alkylsulfonaten sind.

23. Verfahren zur Herstellung von Kunststoffdispersionen nach mindestens einem der vorher genannten Ansprüche, **dadurch gekennzeichnet, dass** sie nach einem Mehrstufenverfahren hergestellt werden, bei dem
- In der ersten Verfahrensstufe Gemische aus hydrophilen Melaminharzvorkondensaten, wasserunlöslichen Melaminharzvorkondensaten und Hydrophobierungsmitteln als hochviskose Flüssigkeiten oder Schmelzen bei 50 bis 130°C und Verweilzeiten von 2 bis 15 min homogenisiert werden, und
- In der zweiten Verfahrensstufe die Mischungen bei hohen Schergeschwindigkeiten und Verweilzeiten von 3 min bis 15 min in 8,7 bis 100 Masse%, bezogen auf die Summe der Melaminharzvorkondensate, Wasser, das 0,5 bis 10 Masse%, bezogen auf die Summe der Melaminharzvorkondensate, Dispergatoren enthält, eingetragen werden und die Dispersionen unter weiterem Rühren bei niedrigen Schergeschwindigkeiten auf Raumtemperatur abgekühlt werden, wobei nach der Abkühlung auf Raumtemperatur latente Härter und saure Härtungskatalysatoren zugesetzt werden.

24. Verfahren zur Herstellung von Kunststoffdispersionen nach Anspruch 23, **dadurch gekennzeichnet, dass** das Wasser in der zweiten Verfahrensstufe 1 bis 25 Masse%, bezogen auf die Gesamtmasse der Melaminharzvorkondensate, C₃-C₆-Alkohole als Dispergierhilfsmittel und/oder wasserlösliche Polymere und/oder wasserlösliche mehrwertige Alkohole enthält und auf Temperaturen bis 90 °C temperiert ist und dass nach der Abkühlung auf Raumtemperatur Pigmente und/oder Flammschutzmittel zugesetzt werden.

25. Verfahren zur Herstellung von Kunststoffdispersionen nach mindestens einem der Ansprüche 1 bis 22, **dadurch gekennzeichnet, dass** sie nach einem Mehrstufenverfahren hergestellt werden, bei dem
- in der ersten Verfahrensstufe wasserunlösliche Melaminharzvorkondensate als hochviskose Flüssigkeiten oder Schmelzen bei 50 bis 130°C bei hohen Schergeschwindigkeiten und Verweilzeiten von 3 min bis 15 min in 8,7 bis 100 Masse%, bezogen auf die wasserunlöslichen Melaminharzvorkondensate, Wasser, das 0,5 bis 10 Masse%, bezogen auf die wasserunlöslichen Melaminharzvorkondensate, Dispergatoren enthält, eingetragen werden und die Dispersionen unter weiterem Rühren bei niedrigen Schwergeschwindigkeiten auf Raumtemperatur abgekühlt werden und
- in der zweiten Verfahrensstufe zur wässrigen Dispersion der wasserunlöslichen Melaminharzvorkondensate hydrophile Melaminharzvorkondensate als Lösungen zugesetzt und homogenisiert werden, wobei den wässrigen Lösungen latente Härter und saure Härtungskatalysatoren zugesetzt werden.

26. Verfahren zur Herstellung von Kunststoffdispersionen nach Anspruch 25, **dadurch gekennzeichnet, dass** die wasserunlöslichen Melaminharzvorkondensate in der ersten Verfahrensstufe und/oder die wässrigen Lösungen der zweiten Verfahrensstufe bis zu 30 Masse% Hydrophobierungsmittel enthalten und das Wasser in der ersten Verfahrensstufe 1 bis 25 Masse%, bezogen auf die wasserunlöslichen Melaminharzvorkondensate, C₃-C₆-Alkohole als Dispergierhilfsmittel und/oder wasserlösliche Polymere und/oder wasserlösliche mehrwertige Alkohole enthält und auf Temperaturen bis 90 °C temperiert ist und dass den wässrigen Lösungen der zweiten Verfahrensstufe Pigmente und/oder Flammschutzmittel zugesetzt werden.

27. Verfahren zur Herstellung von Kunststoffdispersionen nach mindestens einem der Ansprüche 1 bis 22, **dadurch gekennzeichnet, dass** sie nach einem Mehrstufenverfahren hergestellt werden, bei dem
- in der ersten Verfahrensstufe mit C1-C10-Alkoholen veretherte Melaminharze in Gegenwart oder in Abwesenheit von sauren Härtungskatalysatoren mit Polyethylenglykolen mit Molmassen von 500 bis 8000 bei Temperaturen von 50 bis 165 °C zu veretherten Melaminharzoligomeren umgesetzt werden und
- in der zweiten Verfahrensstufe bei Temperaturen von 60 bis 200°C Mischungen aus 15 bis 40 Masse% veretherten Melaminharzoligomeren und 85 bis 60 Masse% mit C1-C10-Alkoholen veretherten Melaminharzen mit Molekulargewichten von 300 bis 800 bei hohem Schergefälle in Wasser, das auf 20 bis 80°C vortemperiert ist, eingetragen werden, wobei 0 bis 8 Masse% Hydrophobierungsmittel in der zweiten Verfahrensstufe der Schmelze aus veretherten Melaminharzoligomeren und mit C1-C10-Alkoholen veretherten Melaminharzen und/oder der wässrigen Phase zugesetzt werden, worauf
- in der dritten Verfahrensstufe 10 bis 40 Masse% hydrophile Melaminharzvorkondensate in Form einer 30 bis 70% igen wässrigen Lösung mit 90 bis 60 Gew% der Mischung aus Melaminharzoligomeren und veretherten Melaminharzen der zweiten Verfahrensstufe gemischt werden.

28. Mit hydrophoben Oberflächen ausgerüstete hydrophile Flächengebilde oder hydrophile Formkörper, hergestellt unter Verwendung von Kunststoffdispersionen nach einem oder mehreren der Ansprüche 1 bis 22.

29. Mit hydrophoben Oberflächen ausgerüstete hydrophile Flächengebilde oder hydrophile Formkörper nach Anspruch 28, **dadurch gekennzeichnet, dass** die Dicke der hydrophoben Oberflächen 1 bis 40 µm beträgt.

30. Mit hydrophoben Oberflächen ausgerüstete hydrophile Flächengebilde oder hydrophile Formkörper nach Anspruch 28 oder 29, **dadurch gekennzeichnet, dass** die Kunststoffdispersionen auf die hydrophilen Flächengebilde, ausgenommen Laminate, oder hydrophilen Formkörper zur Herstellung der hydrophoben Oberflächen nach Vorwärmung der hydrophilen Flächengebilde oder hydrophilen Formkörper auf 50 bis 95°C durch Aufsprühen aufgebracht, und die mit den Kunststoffdispersionen Imprägnierten Flächengebilde oder Formkörper bei 100 bis 145°C getrocknet und ausgehärtet werden.

31. Verwendung von Kunststoffdispersion-beschichteten Flächengebilden oder Formkörpern nach einem oder mehreren der Ansprüche 28 bis 30 für Anwendungen im Bauwesen, insbesondere als Fassadenelemente, sowie im Sport- und Freizeitsektor, bei denen eine verbesserte Bewitterungsresistenz und Verklebbarkeit gefordert werden.

## Claims

1. Synthetic resin dispersions for the production of hydrophilic sheet-like structures or hydrophilic shaped articles provided with hydrophobic surfaces, **characterized in that** the synthetic resin dispersions comprise
a) an aqueous phase of solutions of hydrophilic melamine resin precondensates and latent curing catalysts in water or in mixtures of water and C₁-C₆-alcohols and
b) an organic nanophase in the form of nanodroplets and/or nanoparticles of 70 to 99 % by weight of water-insoluble etherified melamine resin precondensates which contain acid curing catalysts and hydrophobizing agents and
c) dispersing agents in a concentration of 1 to 10 % by weight, based on the total weight of the melamine resin precondensates,
the ratio of hydrophilic melamine resin precondensates to water-insoluble etherified melamine resin precondensates in the synthetic resin dispersions being 10:1 to 1:10 and the water content of the synthetic resin dispersions being 8 to 50 % by weight.

2. Synthetic resin dispersions according to Claim 1, **characterized in that** they comprise 0.1 to 5 % by weight of pigments and/or 0.1 to 5 % by weight of flameproofing agents, in each case based on the total weight of the melamine resin precondensates.

3. Synthetic resin dispersions according to Claim 1 or 2, **characterized in that** the melamine resin precondensates in the aqueous phase and in the organic phase are based on melamine and formaldehyde.

4. Synthetic resin dispersions according to at least one of the preceding claims, **characterized in that** the concentration of the curing catalysts is 0.05 to 3 % by weight, based on the melamine resin precondensates.

5. Synthetic resin dispersions according to at least one of the preceding claims, **characterized in that** the molar ratio of aldehyde component / melamine component in the hydrophilic melamine resin precondensates is 1.6 : 1 to 4.5 : 1 and the concentration of the hydrophilic melamine resin precondensates in the aqueous phase is 10 to 50 % by weight.

6. Synthetic resin dispersions according to at least one of the preceding claims, **characterized in that** the hydrophilic melamine resin precondensates are melamine resin precondensates partly etherified with C₁-C₄-alcohols and/or non-etherified melamine resin precondensates and **in that** the mixing ratio in the mixtures of water and C₁-C₆-alcohols is 95 : 5 to 5 : 95.

7. Synthetic resin dispersions according to Claim 6, **characterized in that** the content of hydroxyl groups which are not etherified with C₁-C₄-alcohols in the melamine resin precondensates partly etherified with C₁-C₄-alcohols is 5 to 75 mol%, based on the sum of hydroxyl groups and C₁-C₄-alkoxy groups in the melamine resin precondensates partly etherified with C₁-C₄-alcohols.

8. Synthetic resin dispersions according to at least one of the preceding claims, **characterized in that** the aqueous phase contains 1 to 20 % by weight, based on the hydrophilic melamine resin precondensates, of further water-soluble polymers and/or water-soluble polyhydric alcohols with molecular weights of 62 to 5,000.

9. Synthetic resin dispersions according to at least one of the preceding claims, **characterized in that** the water-insoluble etherified melamine resin precondensates are melamine resin precondensates completely etherified with C₁-C₄-alcohols, C₂-C₂₀-diols and/or polyalkylene oxides with molecular weights of 250 to 5,000 and/or melamine resin precondensates partly etherified with C₅-C₁₈-alcohols, C₂-C₂₀-diols and/or polyalkylene oxides with molecular weights of 250 to 5,000.

10. Synthetic resin dispersions according to at least one of the preceding claims, **characterized in that** the molar ratio of aldehyde component / melamine component in the water-insoluble etherified melamine resin precondensates is 3 : 1 to 6 : 1 and **in that** the average diameter of the nanodroplets or nanoparticles is 50 to 300 nm.

11. Synthetic resin dispersions according to at least one of the preceding claims, **characterized in that** the organic nanophase comprises 0.1 to 2 % by weight of stabilizers, 1 to 20 % by weight of water-insoluble polyhydric alcohols with molecular weights of 134 to 5,000 and/or 1 to 30 % by weight of laminar silicates, in each case based on the water-insoluble etherified melamine resin precondensates.

12. Synthetic resin dispersions according to at least one of the preceding claims, **characterized in that** the hydrophobizing agents are organic silicon compounds of the type of organosilanols, organosiloxanes, organosilanes, organoaminosilanes or polyorganosiloxanes terminated with amino end groups or hydroxyl end groups; surface-fluorinated SiO₂ nanoparticles, polytetrafluoroethylene nanoparticles and/or ethylenically unsaturated C₄-C₂₀-dicarboxylic acid anhydride copolymers containing imide groups.

13. Synthetic resin dispersions according to at least one of the preceding claims, **characterized in that** non-ionizable dispersing agents or mixtures of 50 to 99 % by weight of non-ionizable and 1 to 50 % by weight of anionic dispersing agents are employed as dispersing agents.

14. Synthetic resin dispersions according to at least one of Claims 1 to 12, **characterized in that** etherified melamine resin oligomers with molecular weights of 2,000 to 30,000 are employed as dispersing agents.

15. Synthetic resin dispersions according to Claim 14, **characterized in that** the etherified melamine resin oligomers are melamine resin oligomers etherified with polyethylene glycols with molecular weights of 1,000 to 8,000 and/or C1-C12-monoalkyl-etherified polyethylene glycols with molecular weights of 1,000 to 8,500 and C1-C10 alcohols.

16. Synthetic resin dispersions according to Claim 15, **characterized in that** the molar ratio of polyethylene glycol / C1-C10 alcohol is 1 : 10 to 2 : 1 and the molar ratio of melamine / formaldehyde / etherifying alcohol is 1 : 2.8 : 2.5 to 1 : 4.5 : 3.5.

17. Synthetic resin dispersions according to at least one of the preceding claims, **characterized in that** the hydrophilic sheet-like structures are laminates, pressed laminates or sheet-like carrier materials based on cellulose, preferably paper, wood, and/or polar plastics of the type of polyamide, polyester, polyvinyl acetate and/or polyvinyl alcohol.

18. Synthetic resin dispersions according to at least one of the preceding claims, **characterized in that** the hydrophilic shaped articles are timber products, or semi-finished products or moulded materials produced by thermoplastic processing of polar plastics of the type of polyamide, polyester, polyvinyl acetate and/or polyvinyl alcohol or by processing of blends of 55 to 90 % by weight of wood and 45 to 10 % by weight of thermoplastics and/or thermosetting plastics.

19. Synthetic resin dispersions according to at least one of the preceding claims, **characterized in that** the latent curing catalysts contained in the aqueous phase are ammonium salts, preferably ammonium peroxy disulfate, ammonium phosphate, ammonium sulfate, ammonium chloride, ammonium oxalate and/or ammonium thiocyanate; C₁-C₄ alkyl ammonium salts of carboxylic acids, preferably methylammonium phthalate, methylammonium maleate and/or the methylamine salt of naphthalenesulphonic acid, and/or esters of phosphoric acid, phosphorous acid, oxalic acid and/or phthalic acid, preferably diethyl phosphate, oxalic acid dimethyl ester and/or phthalic acid dimethyl ester.

20. Synthetic resin dispersions according to at least one of the preceding claims, **characterized in that**
- at a molar ratio of aldehyde component/melamine component up to 4 : 1, blocked sulphonic acids, aliphatic C₄-C₁₈-carboxylic acids, alkali metal salts or ammonium salts of phosphoric acid, C₁-C₁₂-alkyl esters or C₂-C₈-hydroxyalkyl esters of C₆-C₁₄-aromatic carboxylic acids or inorganic acids, salts of melamine or guanamines with C₁-C₁₈-aliphatic carboxylic acids, anhydrides, half-esters or half-amides of C₄-C₂₀-dicarboxylic acids, half-esters or half-amides of copolymers of ethylenically unsaturated C₄-C₂₀-dicarboxylic acid anhydrides and ethylenically unsaturated monomers of the type of C₂-C₂₀-olefins and/or C₈-C₂₀-vinylaromatics, (meth)acrylic acid copolymers and/or salts of C₁-C₁₂-alkylamines or alkanolamines with C₁-C₁₈-aliphatic, C₆-C₁₄-aromatic or alkylaromatic carboxylic acids or inorganic acids of the type of hydrochloric acid, sulphuric acid or phosphoric acid, or
- at a molar ratio above 4 : 1, strong acids, preferably hydrochloric acid, sulphuric acid, phosphoric acid, p-toluenesulphonic acid, methanesulphonic acid, dodecylbenzenesulphonic acid, dinonylnaphthalenesulphonic acid and/or dinonylnaphthalenedisulphonic acid
are employed as acid curing catalysts in the water-insoluble melamine resin precondensates.

21. Synthetic resin dispersions according to Claim 13, **characterized in that** the non-ionizable dispersing agents are ethylene oxide/propylene oxide block copolymers, poly(C₂-C₄-alkylene) oxides monoetherified' with C₈-C₁₈-alcohols, esters of polyhydric alcohols with C₈-C₁₈-carboxylic acids, C₂-C₄-alkylene oxide adducts on C₈-C₁₈-fatty alcohols and/or copolymers of ethylenically unsaturated C₄-C₂₀-dicarboxylic acid anhydrides and ethylenically unsaturated monomers of the type of C₂-C₂₀-olefins, C₈-C₂₀-vinylaromatics, C₄-C₂₁-acrylic acid esters and/or C₅-C₂₂-methacrylic acid esters, which have been imidized with poly(C₂-C₄-alkylene) oxides terminated by amino groups.

22. Synthetic resin dispersions according to Claim 13, **characterized in that** the anionic dispersing agents are alkali metal salts of (meth)acrylic acid copolymers, salts of oxyethylated C₆-C₁₈-alkylphenol-sulphates and/or alkali metal and/or ammonium salts of C₈-C₁₈-carboxylic acids and/or C₈-C₁₈-alkylsulphonates .

23. Process for the preparation of synthetic resin dispersions according to at least one of the preceding claims, **characterized in that** they are prepared by a multi-stage process in which
- in the first process stage mixtures of hydrophilic melamine resin precondensates, water-insoluble melamine resin precondensates and hydrophobizing agents are homogenized as highly viscous liquids or melts at 50 to 130°C over residence times of 2 to 15 minutes and
- in the second process stage the mixtures are introduced at high shear rates over residence times of 3 minutes to 15 minutes into 8.7 to 100 % by weight, based on the sum of the melamine resin precondensates, of water which contains 0.5 to 10 % by weight, based on the sum of the melamine resin precondensates, of dispersing agents and the dispersions are cooled to room temperature at low shear rates, with further stirring, latent curing agents and acid curing catalysts being added after the cooling to room temperature.

24. Process for the preparation of synthetic resin dispersions according to Claim 23, **characterized in that** the water in the second process stage contains 1 to 25 % by weight, based on the total weight of the melamine resin precondensates, of C₃-C₆-alcohols as dispersing auxiliaries and/or water-soluble polymers and/or water-soluble polyhydric alcohols and is heated to temperatures up to 90°C, and **in that** pigments and/or flameproofing agents are added after the cooling to room temperature.

25. Process for the preparation of synthetic resin dispersions according to at least one of Claims 1 to 22, **characterized in that** they are prepared by a multi-stage process in which
- in the first process stage water-insoluble melamine resin precondensates are introduced as highly viscous liquids or melts at 50 to 130°C at high shear rates over residence times of 3 minutes to 15 minutes into 8.7 to 100 % by weight, based on the water-insoluble melamine resin precondensates, of water which contains 0.5 to 10 % by weight, based on the water-insoluble melamine resin precondensates, of dispersing agents and the dispersions are cooled to room temperature at low shear rates, with further stirring, and
- in the second process stage hydrophilic melamine resin precondensates are added as solutions to the aqueous dispersion of the water-insoluble melamine resin precondensates and are homogenized, latent curing agents and acid curing catalysts being added to the aqueous solutions.

26. Process for the preparation of synthetic resin dispersions according to Claim 25, **characterized in that** the water-insoluble melamine resin precondensates in the first process stage and/or the aqueous solutions of the second process stage contain up to 30 % by weight of hydrophobizing agent and the water in the first process stage contains 1 to 25 % by weight, based on the water-insoluble melamine resin precondensates, of C₃-C₆-alcohols as dispersing auxiliaries and/or water-soluble polymers and/or water-soluble polyhydric alcohols and is heated to temperatures up to 90°C, and **in that** pigments and/or flameproofing agents are added to the aqueous solutions of the second process stage.

27. Process for the preparation of synthetic resin dispersions according to at least one of Claims 1 to 22, **characterized in that** they are prepared by a multi-stage process in which
- in the first process stage melamine resins etherified with C1-C10-alcohols are reacted, in the presence or in the absence of acid curing catalysts, with polyethylene glycols with molecular weights of 500 to 8,000 at temperatures of 50 to 165°C to give etherified melamine resin oligomers, and
- in the second process stage, at temperatures of 60 to 200°C, mixtures of 15 to 40 % by weight of etherified melamine resin oligomers and 85 to 60 % by weight of melamine resins etherified with C1-C10-alcohols and with molecular weights of 300 to 800 are introduced at a high shear gradient into water, which is preheated to 20 to 80°C, 0 to 8 % by weight of hydrophobizing agent being added to the melt of etherified melamine resin oligomers and melamine resins etherified with C1-C10-alcohols and/or the aqueous phase in the second process stage, after which
- in the third process stage 10 to 40 % by weight of hydrophilic melamine resin precondensates are mixed in the form of a 30 to 70 % strength aqueous solution with 90 to 60 % by weight of the mixture of melamine resin oligomers and etherified melamine resins of the second process stage.

28. Hydrophilic sheet-like structures or hydrophilic shaped articles provided with hydrophobic surfaces, produced using synthetic resin dispersions according to one or more of Claims 1 to 22.

29. Hydrophilic sheet-like structures or hydrophilic shaped articles provided with hydrophobic surfaces, according to Claim 28, **characterized in that** the thickness of the hydrophobic surfaces is 1 to 40 µm.

30. Hydrophilic sheet-like structures or hydrophilic shaped articles provided with hydrophobic surfaces, according to Claim 28 or 29, **characterized in that** for production of the hydrophobic surfaces, the synthetic resin dispersions are applied to the hydrophilic sheet-like structures, excluding laminates, or hydrophilic shaped articles by spraying on after preheating of the hydrophilic sheet-like structures or hydrophilic shaped articles to 50 to 95°C, and the sheet-like structures or shaped articles impregnated with the synthetic resin dispersions are dried and cured at 100 to 145°C.

31. Use of sheet-like structures or shaped articles coated with synthetic resin dispersions, according to one or more of Claims 28 to 30, for uses in the construction sector, in particular as cladding panels, and in the sport and leisure sector where an improved resistance to weathering and the ability to be glued are required.

## Revendications

1. Dispersions de matières plastiques pour la production d'objets plats hydrophiles ou de corps moulés hydrophiles, munis de surfaces hydrophobes, **caractérisées en ce que** les dispersions de matières plastiques sont constituées
a) d'une phase aqueuse à base de solutions de produits de précondensation de résines mélamine, hydrophiles, et de catalyseurs latents de durcissement, dans de l'eau ou des mélanges d'eau et d'alcools en C₁-C₆ et
b) d'une nanophase organique sous forme de nanogouttelettes et/ou de nanoparticules constituées de 70 à 99 % en masse de produits de précondensation de résines mélamine, éthérifiés, insolubles dans l'eau, qui contiennent des catalyseurs de durcissement acides et des agents d'hydrophobie et
c) de dispersants à une concentration de 1 à 10 % en masse, par rapport à la masse totale des produits de précondensation de résines mélamine,
le rapport des produits de précondensation de résines mélamine, hydrophiles, aux produits de précondensation de résines mélamine, éthérifiés, insolubles dans l'eau, allant de 10:1 à 1:10 dans les dispersions de matières plastiques et la teneur en eau des dispersions de matières plastiques allant de 8 à 50 % en masse.

2. Dispersions de matières plastiques selon la revendication 1, **caractérisées en ce que** 0,1 à 5 % en masse de pigments et/ou 0,1 à 5 % en masse d'agents ignifuges sont contenus, chaque fois par rapport à la masse totale des produits de précondensation de résines mélamine.

3. Dispersions de matières plastiques selon la revendication 1 ou 2, **caractérisées en ce que** les produits de précondensation de résines mélamine sont à base de mélamine et formaldéhyde dans la phase aqueuse et dans la phase organique.

4. Dispersions de matières plastiques selon au moins l'une des revendications précédentes, **caractérisées en ce que** la concentration des catalyseurs de durcissement va de 0,05 à 3 % en masse, par rapport aux produits de précondensation de résines mélamine.

5. Dispersions de matières plastiques selon au moins l'une des revendications précédentes, **caractérisées en ce que** le rapport molaire composant aldéhyde/composant mélamine dans les produits de précondensation de résines mélamine, hydrophiles, va de 1,6:1 à 4,5:1 et la concentration des produits de précondensation de résines mélamine, hydrophiles, dans la phase aqueuse va de 10 à 50 % en masse.

6. Dispersions de matières plastiques selon au moins l'une des revendications précédentes, **caractérisées en ce que** les produits de précondensation de résines mélamine, hydrophiles, sont partiellement éthérifiés par des alcools en C₁-C₄ et/ou les produits de précondensation de résines mélamine sont non éthérifiés et **en ce que** le rapport de mélange dans les mélanges d'eau et d'alcools en C₁-C₆ va de 95:5 à 5:95.

7. Dispersions de matières plastiques selon la revendication 6, **caractérisées en ce que** la proportion des groupes hydroxy non éthérifiés par des alcools en C₁-C₄ des produits de précondensation de résines mélamine partiellement éthérifiés par des alcools en C₁-C₄ va de 5 à 75 % en moles, par rapport à la somme des groupes hydroxy et des groupes alcoxy en C₁-C₄ dans les produits de précondensation de résines mélamine partiellement éthérifiés par des alcools en C₁-C₄.

8. Dispersions de matières plastiques selon au moins l'une des revendications précédentes, **caractérisées en ce que** la phase aqueuse contient de 1 à 20 % en masse, par rapport aux produits de précondensation de résines mélamine, hydrophiles, d'autres polymères hydrosolubles et/ou d'alcools polyhydriques hydrosolubles ayant des masses moléculaires de 62 à 5 000.

9. Dispersions de matières plastiques selon au moins l'une des revendications précédentes, **caractérisées en ce que** les produits de précondensation de résines mélamine éthérifiés, insolubles dans l'eau, sont des produits de précondensation de résines mélamine totalement éthérifiés par des alcools en C₁-C₄, des diols en C₂-C₂₀ et/ou des polyoxyalkylènes ayant des masses moléculaires de 250 à 5 000 et/ou des produits de précondensation de résines mélamine partiellement éthérifiés par des alcools en C₅-C₁₈, des diols en C₂-C₂₀ et/ou des polyoxyalkylènes ayant des masses moléculaires de 250 à 5 000.

10. Dispersions de matières plastiques selon au moins l'une des revendications précédentes, **caractérisées en ce que** le rapport molaire composant aldéhyde/composant mélamine dans les produits de précondensation de résines mélamine, éthérifiés, insolubles dans l'eau, va de 3:1 à 6:1 et **en ce que** le diamètre moyen des nanogouttelettes ou des nanoparticules va de 50 à 300 nm.

11. Dispersions de matières plastiques selon au moins l'une des revendications précédentes, **caractérisées en ce que** la nanophase organique contient de 0,1 à 2 % en masse de stabilisants, de 1 à 20 % en masse d'alcools polyhydriques insolubles dans l'eau, ayant des masses moléculaires de 134 à 5 000 et/ou de 1 à 30 % en masse de silicates lamellaires, chaque fois par rapport aux produits de précondensation de résines mélamine, éthérifiés, insolubles dans l'eau.

12. Dispersions de matières plastiques selon au moins l'une des revendications précédentes, **caractérisées en ce que** les agents d'hydrophobie sont des composés siliciés organiques du type organosilanols, organosiloxanes, organosilanes, organoaminosilanes, polyorganosiloxanes terminés par des groupes terminaux amino ou des groupes terminaux hydroxy ; des nanoparticules de SiO₂ fluorées en surface, des nanoparticules de polytétrafluoroéthylène et/ou des copolymères, contenant des groupes imido, d'anhydrides d'acides dicarboxyliques en C₄-C₂₀ à insaturation éthylénique.

13. Dispersions de matières plastiques selon au moins l'une des revendications précédentes, **caractérisées en ce qu'**on utilise comme dispersants des dispersants non ionogène ou des mélanges de 50 à 99 % en masse de dispersants non ionogène et de 1 à 50 % en masse de dispersants anioniques.

14. Dispersions de matières plastiques selon au moins l'une quelconque des revendications 1 à 12, **caractérisées en ce qu'**on utilise comme dispersants des oligomères de résines mélamine éthérifiés ayant des masses moléculaires de 2 000 à 30 000.

15. Dispersions de matières plastiques selon la revendication 14, **caractérisées en ce que** les oligomères de résines mélamine éthérifiés sont des oligomères de résines mélamine éthérifiés par des polyéthylèneglycols ayant des masses moléculaires de 1 000 à 8 000 et/ou des polyéthylèneglycols ayant des masses moléculaires de 1 000 à 8 500, monoéthérifiés par des groupes alkyle en C₁-C₁₂, et des alcools en C₁-C₁₀.

16. Dispersions de matières plastiques selon la revendication 15, **caractérisées en ce que** le rapport molaire polyéthylèneglycol/alcool en C₁-C₁₀ va de 1:10 à 2:1 et le rapport molaire mélamine/formaldéhyde/alcool d'éthérification va de 1:2,8:2,5 à 1:4,5:3,5.

17. Dispersions de matières plastiques selon au moins l'une des revendications précédentes, **caractérisées en ce que** les objets plats hydrophiles sont des agglomérés stratifiés, des matériaux pressés en couches ou des matériaux de support plats à base de cellulose, de préférence de papier, de bois, et/ou des matières plastiques polaires du type polyamide, polyester, poly(acétate de vinyle) et/ou poly(alcool vinylique).

18. Dispersions de matières plastiques selon au moins l'une des revendications précédentes, **caractérisées en ce que** les corps moulés hydrophiles sont des produits en bois, des matières moulées ou des produits semi-finis obtenus par transformation thermoplastique de matières plastiques polaires du type polyamide, polyester, poly(acétate de vinyle) et/ou poly(alcool vinylique) ou par transformation d'alliages de 55 à 90 % en masse de bois et de 45 à 10 % en masse de matières synthétiques thermoplastiques et/ou thermodurcissables.

19. Dispersions de matières plastiques selon au moins l'une des revendications précédentes, **caractérisées en ce que** les catalyseurs latents de durcissement contenus dans la phase aqueuse sont des sels d'ammonium, de préférence le peroxydisulfate d'ammonium, le phosphate d'ammonium, le sulfate d'ammonium, le chlorure d'ammonium, l'oxalate d'ammonium et/ou le sulfocyanure d'ammonium ; des sels d'alkyl(C₁-C₄)-ammonium d'acides carboxyliques, de préférence le phtalate de méthylammonium, le maléate de méthylammonium et/ou le sel de mélamine de l'acide naphtalènesulfonique, et/ou des esters de l'acide phosphorique, de l'acide phosphoreux, de l'acide oxalique et/ou de l'acide phtalique, de préférence le phosphate de diéthyle, l'ester de l'oxalate de diméthyle et/ou du phtalate de diméthyle.

20. Dispersions de matières plastiques selon au moins l'une des revendications précédentes, **caractérisées en ce qu'**on utilise comme catalyseurs de durcissement acides dans les produits de précondensation de résines mélamine, insolubles dans l'eau,
- dans le cas d'un rapport molaire composant aldéhyde/composant mélamine allant jusqu'à 4:1, des acides sulfoniques bloqués, des acides carboxyliques aliphatiques en C₄-C₁₈, des sels de métaux alcalins ou des sels d'ammonium de l'acide phosphorique, des esters d'alkyle en C₁-C₁₂ ou des esters d'hydroxyalkyle en C₂-C₈ d'acides carboxyliques aromatiques en C₆-C₁₄ ou d'acides minéraux, des sels de mélamine ou de guanamines avec des acides carboxyliques aliphatiques en C₁-C₁₈, des anhydrides, des hémiesters ou des hémiamides d'acides dicarboxyliques en C₄-C₂₀, des hémiesters ou des hémiamides de copolymères d'anhydrides d'acides dicarboxyliques en C₄-C₂₀ à insaturation éthylénique et de monomères à insaturation éthylénique du type oléfines en C₂-C₂₀ et/ou composés vinylaromatiques en C₈-C₂₀, de copolymères d'acide (méth)acrylique et/ou des sels d'alkyl(C₁-C₁₂)amines ou d'alcanolamines avec des acides carboxyliques aliphatiques en C₁-C₁₈, aromatiques ou alkylaromatiques en C₆-C₁₄ ou des acides minéraux du type acide chlorhydrique, acide sulfurique ou acide phosphorique, ou
- dans le cas d'un rapport molaire supérieur à 4:1, des acides forts, de préférence l'acide chlorhydrique, l'acide sulfurique, l'acide phosphorique, l'acide p-toluènesulfonique, l'acide méthanesulfonique, l'acide dodécylbenzènesulfonique, l'acide dinonylnaphtalènesulfonique et/ou l'acide dinonylnaphtalènedisulfonique.

21. Dispersions de matières plastiques selon la revendication 13, **caractérisées en ce que** les dispersants non-ionogène sont des copolymères séquencés oxyde d'éthylène/oxyde de propylène, des poly[oxyalkylène(C₂-C₄)], monoéthérifiés par des alcools en C₈-C₁₈, des esters d'alcools polyhydriques avec des acides carboxyliques en C₈-C₁₈, des produits d'addition par fixation d'oxydes d'alkylène en C₂-C₄ sur des alcools gras en C₈-C₁₈ et/ou des copolymères d'anhydrides d'acides dicarboxyliques en C₄-C₂₀ à insaturation éthylénique et de monomères à insaturation éthylénique du type oléfines en C₂-C₂₀, composés vinylaromatiques en C₈-C₂₀, esters d'acide acrylique en C₄-C₂₁ et/ou esters d'acide méthacrylique en C₅-C₂₂, qui ont été imidés avec des poly[oxyde d'alkylène(C₂-C₄)]s terminés par des groupes amino.

22. Dispersions de matières plastiques selon la revendication 13, **caractérisées en ce que** les dispersants anioniques sont des sels alcalins de copolymères d'acide (méth)acrylique, des sels d'alkyl(C₆-C₁₈)phénol-sulfates oxyéthylés et/ou des sels alcalins et/ou d'ammonium d'acides carboxyliques en C₈-C₁₈ et/ou des alkyl (C₈-C₁₈) sulfonates.

23. Procédé pour la préparation de dispersions de matières plastiques selon au moins l'une des revendications précédentes, **caractérisé en ce qu'**on les prépare selon un procédé en plusieurs étapes, dans lequel
- dans la première étape du procédé on homogénéise des mélanges de produits de précondensation de résines mélamine, hydrophiles, de produits de précondensation de résines mélamine, insolubles dans l'eau et d'agents d'hydrophobie, sous forme de liquides très visqueux ou de masses fondues, à 50-130 °C et pendant des temps de séjour de 2 à 15 minutes
et
- dans la deuxième étape du procédé on introduit les mélanges, à de grandes vitesses de cisaillement et pendant des temps de séjour de 3 minutes à 15 minutes, dans 8,7 à 100 % en masse, par rapport à la somme des produits de précondensation de résines mélamine, d'eau qui contient 0,5 à 10 % en masse, par rapport à la somme des produits de précondensation de résines mélamine, de dispersants, et on refroidit les dispersions, en poursuivant l'agitation à faibles vitesses de cisaillement jusqu' à la température ambiante, des durcisseurs latents et des catalyseurs de durcissement acides étant ajoutés après le refroidissement jusqu'à la température ambiante.

24. Procédé pour la préparation de dispersions de matières plastiques selon la revendication 23, **caractérisé en ce que** dans la deuxième étape du procédé l'eau contient de 1 à 25 % en masse, par rapport à la masse totale des produits de précondensation de résines mélamine, d'alcools en C₃-C₆ en tant qu'adjuvants de dispersion et/ou de polymères hydrosolubles et/ou d'alcools polyhydriques hydrosolubles et est thermostatée à des températures allant jusqu'à 90 °C, et **en ce qu'**après le refroidissement jusqu'à la température ambiante on ajoute des pigments et/ou des agents ignifuges.

25. Procédé pour la préparation de dispersions de matières plastiques selon au moins l'une des revendications 1 à 22, **caractérisé en ce qu'**on les prépare selon un procédé en plusieurs étapes, dans lequel
- dans la première étape du procédé on introduit des produits de précondensation de résines mélamine, insolubles dans l'eau, sous forme de liquides très visqueux ou de masses fondues, à 50-130°C, à de grandes vitesses de cisaillement et pendant des temps de séjour de 3 minutes à 15 minutes, dans 8,7 à 100 % en masse, par rapport à la somme des produits de précondensation de résines mélamine, insolubles dans l'eau, d'eau qui contient 0,5 à 10 % en masse, par rapport aux produits de précondensation de résines mélamine, insolubles dans l'eau, de dispersants, et on refroidit les dispersions, en poursuivant l'agitation à faibles vitesses de cisaillement jusqu' à la température ambiante,
et
- dans la deuxième étape du procédé on ajoute des produits de précondensation de résines mélamine, hydrophiles, sous forme de solutions, aux dispersions aqueuses des produits de précondensation de résines mélamine, insolubles dans l'eau, et on homogénéise, des durcisseurs latents et des catalyseurs de durcissement acides étant ajoutés aux solutions aqueuses.

26. Procédé pour la préparation de dispersions de matières plastiques selon la revendication 25, **caractérisé en ce que** les produits de précondensation de résines mélamine, insolubles dans l'eau, dans la première étape du procédé et/ou les solutions aqueuses de la deuxième étape du procédé contiennent jusqu'à 30 % en masse d'agents d'hydrophobie et l'eau dans la première étape du procédé contient de 1 à 25 % en masse, par rapport aux produits de précondensation de résines mélamine, insolubles dans l'eau, d'alcools en C₃-C₆ en tant qu'adjuvants de dispersion et/ou de polymères hydrosolubles et/ou d'alcools polyhydriques hydrosolubles et est thermostatée à des températures allant jusqu'à 90 °C, et **en ce que** des pigments et/ou des agents ignifuges sont ajoutés aux solutions aqueuses de la deuxième étape du procédé.

27. Procédé pour la préparation de dispersions de matières plastiques selon au moins l'une des revendications 1 à 22, **caractérisé en ce qu'**on les prépare selon un procédé en plusieurs étapes, dans lequel
- dans la première étape du procédé on fait réagir des résines mélamine, éthérifiées avec des alcools en C₁-C₁₀, en présence ou en absence de catalyseurs acides de durcissement, avec des polyéthylèneglycols ayant des masses moléculaires de 500 à 8 000, à des températures de 50 à 165 °C, pour obtenir des oligomères de résines mélamine, éthérifiés,
et
- dans la deuxième étape du procédé on introduit à des température de 60 à 200 °C des mélanges de 15 à 40 % en masse d'oligomères de résines mélamine éthérifiés et de 85 à 60 % en masse de résines mélamine éthérifiées par des alcools en C₁-C₁₀, ayant des poids moléculaires de 300 à 800, à grand gradient de cisaillement, dans de l'eau qui est préalablement thermostatée à 20-80 °C, 0 à 8 % en masse d'agent d'hydrophobie étant ajoutés, dans la deuxième étape du procédé, à la masse fondue d'oligomères de résines mélamine éthérifiés et de résines mélamine éthérifiées par des alcools en C₁-C₁₀ et/ou à la phase aqueuse, à la suite de quoi
- dans la troisième étape du procédé on mélange de 10 à 40 % en masse de produits de précondensation de résines mélamine, hydrophiles, sous forme d'une solution aqueuse à 30-70 %, avec 90 à 60 % en poids du mélange d'oligomères de résines mélamine et de résines mélamine éthérifiées de la deuxième étape du procédé.

28. Objets plats hydrophiles ou corps moulés hydrophiles, munis de surfaces hydrophobes, produits avec utilisation de dispersions de matières plastiques selon une ou plusieurs des revendications 1 à 22.

29. Objets plats hydrophiles ou corps moulés hydrophiles, munis de surfaces hydrophobes, selon la revendication 28, **caractérisés en ce que** l'épaisseur des surfaces hydrophobes va de 1 à 40 µm.

30. Objets plats hydrophiles ou corps moulés hydrophiles, munis de surfaces hydrophobes, selon la revendication 28 ou 29, **caractérisés en ce que** les dispersions de matières plastiques sont appliquées par pulvérisation sur les objets plats hydrophiles, à l'exception de stratifiés, ou les corps moulés hydrophiles, pour la production des surfaces hydrophobes après préchauffage à 50-95°C des objets plats hydrophiles ou des corps moulés hydrophiles, et les objets plats ou les corps moulés, imprégnés avec les dispersions de matières plastiques, sont séchés à 100-145°C et durcis complètement.

31. Utilisation d'objets plats ou de corps moulés, revêtus de dispersion de matière plastique, selon une ou plusieurs des revendications 28 à 30, pour des applications dans le bâtiment, notamment en tant qu'éléments de façade, ainsi que dans le secteur du sport et du temps libre, dans lesquelles sont requises une résistance améliorée aux agents atmosphériques et une aptitude améliorée au collage.
